# EUROPEAN PATENT APPLICATION

(11) **EP 4 443 971 A1**
(43) Date of publication of application: **09.10.2024**
(21) Application number: 23737142.2
(22) Date of filing: 06.01.2023
(51) Int. Cl.: H04W 36/02, H04W 24/10, H04W 36/00

(54) **INFORMATION RECORDING METHOD, COMMUNICATION APPARATUS, AND COMPUTER STORAGE MEDIUM**

(30) Priority: 06.01.2022 CN 202210009634
(71) Applicant: Huawei Technologies Co., Ltd., Shenzhen, Guangdong 518129 (CN)
(72) Inventor: ZENG, Yu, Shenzhen, Guangdong 518129 (CN); ZHENG, Wuyang, Shenzhen, Guangdong 518129 (CN); GENG, Tingting, Shenzhen, Guangdong 518129 (CN)
(74) Representative: Pfenning, Meinig & Partner mbB
(86) International application number: PCT/CN2023/070943
(87) International publication number: WO 2023/131280

(57) **Abstract**

This application provides an information recording method, a communication apparatus, and a computer storage medium. The method includes: A terminal hands over from a source cell of a source access network device to a target cell of a target access network device. The terminal records a first report and a second report, where the first report and the second report separately include identification information of the terminal in the target cell, the first report further includes potential handover failure information in a process in which the terminal hands over from the source cell of the source access network device to the target cell of the target access network device, and the second report further includes related information in a process in which the terminal performs random access to the target cell. The identification information of the terminal in the target cell is added to the first report and the second report, so that it can be determined that the first report and the second report are related to a same target cell. This avoids excessive adjustment of a mobility parameter on a network side, and improves an effect of mobility optimization on the terminal.

## Description

This application claims priority to Chinese Patent Application No. 202210009634.8, filed with the China National Intellectual Property Administration on January 6, 2022 and entitled "INFORMATION RECORDING METHOD, COMMUNICATION APPARATUS, AND COMPUTER STORAGE MEDIUM", which is incorporated herein by reference in its entirety.

### TECHNICAL FIELD

This application relates to the field of communication technologies, and in particular, to an information recording method, a communication apparatus, and a computer storage medium.

### BACKGROUND

A terminal may perform a cell handover in a moving process to maintain communication quality. In a scenario in which the cell handover is successful, a potential problem that causes a handover failure in the future may exist. If a network side identifies such a potential problem, the network side may perform mobility optimization accordingly.

Therefore, a mechanism of reporting a successful handover report (successful handover report, SHR) is proposed. The terminal records the SHR and reports the SHR to the network side, so that the network side performs mobility optimization on the terminal. The SHR includes information related to a potential handover failure in a successful handover process of the terminal, for example, includes a related parameter in a process in which the terminal performs random access to a target cell. Because the SHR is reported on the premise that the cell handover is successful, that is, the process of the random access to the target cell by the terminal is successful, the terminal further records a random access report and reports the random access report to the network side.

Even if content of the SHR and the random access report that are received by the network side is repeated, the network side still adjusts a same parameter based on the SHR and the random access report separately. This causes excessive adjustment of the related parameter and a failure to perform mobility optimization on the terminal.

### SUMMARY

Embodiments of this application provide an information recording method, a communication apparatus, and a computer storage medium, to perform mobility optimization.

According to a first aspect, this application provides an information recording method, including: A terminal hands over from a source cell of a source access network device to a target cell of a target access network device. The terminal records a first report, and the terminal records a second report, where the first report includes potential handover failure information in a process in which the terminal hands over from the source cell to the target cell, and identification information of the terminal in the target cell, and the second report includes related information in a process in which the terminal performs random access to the target cell, and the identification information of the terminal in the target cell.

According to the information recording method provided in this application, the identification information of the terminal in the target cell is added to the first report and the second report, so that it can be determined that the first report and the second report are related to a same target cell. In this way, if the terminal subsequently reports the first report and the second report to a network side, the network side may associate the first report with the second report based on the identification information, to avoid excessive adjustment of a mobility parameter, and improve an effect of mobility optimization on the terminal.

In a possible implementation of the first aspect, the terminal sends the first report to the target access network device or the source access network device via a first access network device; or the terminal sends the first report to the target access network device or the source access network device.

In a possible implementation of the first aspect, the terminal sends the second report to the target access network device or the source access network device via a second access network device; or the terminal sends the second report to the target access network device or the source access network device.

In the foregoing two implementations, the first report and/or the second report may be directly sent to the source access network device or the target access network device, or may be forwarded to the source access network device or the target access network device via another access network device. The source access network device or the target access network device may perform mobility optimization on the terminal based on the first report and/or the second report, and may associate the obtained first report with the obtained second report, to avoid the excessive adjustment of the mobility parameter, and improve the effect of the mobility optimization on the terminal.

In a possible implementation of the first aspect, the first report and/or the second report further include/includes any one or more of the following information: first indication information, where the first indication information indicates whether running duration of a first timer exceeds a first threshold; time information indicating the process in which the terminal performs the random access to the target cell; or the running duration of the first timer. The first timer may be a T304 timer.

Optionally, the identification information of the terminal in the target cell is a cell radio network temporary identifier or a temporary cell radio network temporary identifier of the terminal in the target cell.

In a possible implementation of the first aspect, that the terminal records a first report includes: The terminal records the first report according to a format corresponding to a radio access technology of the source cell; or the terminal records the first report according to a format corresponding to a radio access technology of the target cell.

Optionally, the radio access technology of the source cell is different from the radio access technology of the target cell.

Optionally, that the terminal records the first report according to a format corresponding to a radio access technology of the target cell includes: The terminal records the first report according to the format corresponding to the radio access technology of the target cell as predefined in a protocol; when a quantity of times that the terminal attempts to access the target cell exceeds a second threshold, the terminal records the first report according to the format corresponding to the radio access technology of the target cell; if recording of the first report is triggered because the running duration of the first timer exceeds the first threshold, the terminal records the first report according to the format corresponding to the radio access technology of the target cell; or when quality of a communication link between the terminal and the target cell is less than a third threshold, the terminal records the first report according to the format corresponding to the radio access technology of the target cell.

Optionally, that the terminal records the first report according to a format corresponding to a radio access technology of the source cell includes: The terminal records the first report according to the format corresponding to the radio access technology of the source cell as predefined in a protocol; or when quality of a communication link between the terminal and the source cell is less than a fourth threshold, the terminal records the first report according to the format corresponding to the radio access technology of the source cell.

Optionally, the terminal sends identification information of an aim cell of the first report and a container (container) including the first report to the first access network device, where the aim cell is the source cell or the target cell. Therefore, the first access network device does not need to parse content in the container, and may directly forward the container to an access network device to which the aim cell belongs, that is, the source access network device or the target access network device.

According to the foregoing implementation, if the terminal triggers reporting of the first report during an inter-RAT handover, the terminal may record the first report according to a format corresponding to a radio access technology of a cell (the source cell or the target cell) related to a potential handover failure, and the terminal reports identification information of the cell related to the potential handover failure when reporting the first report, so that the first access network device can forward, in a correct and timely manner, the first report to an access network device (the source access network device or the target access network device) to which the cell belongs. In this way, the source access network device or the target access network device may correctly parse the first report, to obtain a reason for the potential handover failure, and perform mobility optimization on the terminal in a timely manner.

According to a second aspect, this application provides an information recording method, including: A terminal hands over from a source cell of a source access network device to a target cell of a target access network device. The terminal records a first report according to a format corresponding to a radio access technology of the source cell; or the terminal records a first report according to a format corresponding to a radio access technology of the target cell, where the first report includes potential handover failure information in a process in which the terminal hands over from the source cell to the target cell.

The source cell and the target cell may use different radio access technologies, that is, different standards.

In a possible implementation of the second aspect, that the terminal records a first report according to a format corresponding to a radio access technology of the target cell includes: The terminal records the first report according to the format corresponding to the radio access technology of the target cell as predefined in a protocol; when a quantity of times that the terminal attempts to access the target cell exceeds a second threshold, the terminal records the first report according to the format corresponding to the radio access technology of the target cell; if recording of the first report is triggered because running duration of a first timer exceeds a first threshold, the terminal records the first report according to the format corresponding to the radio access technology of the target cell; or when quality of a communication link between the terminal and the target cell is less than a third threshold, the terminal records the first report according to the format corresponding to the radio access technology of the target cell.

In a possible implementation of the second aspect, that the terminal records a first report according to a format corresponding to a radio access technology of the source cell includes: The terminal records the first report according to the format corresponding to the radio access technology of the source cell as predefined in a protocol; or when quality of a communication link between the terminal and the source cell is less than a fourth threshold, the terminal records the first report according to the format corresponding to the radio access technology of the source cell.

In a possible implementation of the second aspect, the method further includes: The terminal sends the first report to a transmission node.

Optionally, the terminal sends the first report based on a request of the transmission node.

The transmission node may be the source access network device or the target access network device, or may be an access network device other than the source access network device or the target access network device. The access network device may forward the first report to the source access network device or the target access network device.

In a possible implementation of the second aspect, the terminal sends a container (container) including the first report to the transmission node, and sends identification information of an aim cell to the transmission node, where the aim cell is the source cell or the target cell, so that the transmission node forwards the container to an access network device to which the aim cell belongs, that is, the source access network device or the target access network device.

According to the information recording method in the second aspect, if the terminal triggers reporting of the first report during an inter-RAT handover, the terminal may record the first report according to a format corresponding to a radio access technology of a cell (the source cell or the target cell) related to a potential handover failure, and the terminal reports identification information of the cell related to the potential handover failure when reporting the first report, so that a first access network device can forward, in a correct and timely manner, the first report to an access network device (the source access network device or the target access network device) to which the cell belongs. In this way, the source access network device or the target access network device may correctly parse the first report, to obtain a reason for the potential handover failure, and perform mobility optimization on the terminal in a timely manner.

According to a third aspect, this application provides an information transmission method, including: A transmission node receives a first report and/or a second report from a terminal, where the first report includes potential handover failure information in a process in which the terminal hands over from a source cell of a source access network device to a target cell of a target access network device; and the second report includes related information in a process in which the terminal performs random access to the target cell.

In a possible implementation of the third aspect, the method further includes: The transmission node sends the received first report or second report to the source access network device and/or the target access network device. Optionally, the transmission node sends content related to the source access network device in the first report to the source access network device, and sends content related to the target access network device in the first report to the target access network device.

In a possible implementation of the third aspect, when the transmission node receives the first report, the method further includes: The transmission node determines, based on the first report, a reason for triggering reporting of the first report. The transmission node determines, based on the reason for triggering the reporting of the first report, to send the first report to the target access network device and/or the source access network device. Optionally, when recording of the first report is triggered because a first timer exceeds a first threshold, the transmission node sends the content related to the source access network device in the first report to the source access network device, and sends the content related to the target access network device in the first report to the target access network device. Alternatively, when recording of the first report is triggered because running duration of a second timer exceeds a second threshold or running duration of a third timer exceeds a third threshold, the transmission node sends the first report to the source access network device.

In a possible implementation of the third aspect, the method further includes: The transmission node sends the first report to the source access network device or the target access network device as predefined in a protocol.

In a possible implementation of the third aspect, when the transmission node receives the first report, the method further includes: The transmission node receives identification information of an aim cell from the terminal. The transmission node sends, based on the identification information of the aim cell, the first report to an access network device to which the aim cell belongs, to send the first report to the target access network device. The aim cell may be the source cell or the target cell. In this implementation, the transmission node does not need to determine, by itself, an access network device to which the first report is to be forwarded, but forwards the first report based on the aim cell indicated by the terminal.

Optionally, that a transmission node receives a first report from a terminal includes: The transmission node receives a container from the terminal, where the container includes the first report. The identification information of the aim cell and the container may be included in one message, and the identification information of the aim cell is located outside the container. The transmission node does not need to parse the container, and may directly forward the container to the access network device to which the aim cell belongs.

Optionally, the method further includes: The transmission node indicates a format of the first report to the access network device to which the aim cell belongs.

According to the foregoing implementation, the transmission node may forward, in a timely and accurate manner, the first report to an access network device (the source access network device and/or the target access network device) related to a potential handover failure, so that the access network device can adjust, in a timely manner, a mobility parameter related to the first report, to improve an effect of mobility optimization on the terminal. In a possible implementation of the third aspect, the first report and the second report separately include identification information of the terminal in the target cell.

Optionally, the transmission node is the target access network device or the source access network device, and when the transmission node receives the first report and the second report, the method further includes: The transmission node associates the first report with the second report based on the identification information that is of the terminal in the target cell and that is separately included in the first report and the second report. The first report is associated with the second report, so that excessive adjustment performed by the transmission node on the mobility parameter in the access process can be avoided, and the mobility optimization effect can be improved.

In a possible implementation of the third aspect, the method further includes: The transmission node receives, from the terminal, indication information indicating that the terminal stores the first report. The transmission node determines that data transmission exists between the terminal and the transmission node. The transmission node sends, to the terminal, a request for requesting the terminal to report the first report. According to this implementation, the first report is reported after the transmission node determines that the data transmission exists between the transmission node and the terminal, to avoid a problem that the first report cannot include user plane interruption time information because no data transmission exists between the transmission node and the terminal. In this way, a network side can obtain, in a timely manner, the first report including the user plane interruption time information, to improve the effect of the mobility optimization on the terminal.

Optionally, based on an uplink data packet from the terminal, or when the transmission node receives feedback information of a downlink data packet from the terminal, the transmission node determines that the data transmission exists between the terminal and the transmission node.

In a possible implementation, in any one of the foregoing aspects, running duration of the first timer is duration from time when the terminal receives a handover indication or starts to perform a conditional handover to time when the terminal successfully accesses the target cell, the running duration of the second timer is duration from time when the terminal device starts detection to time when a physical layer problem is detected between the terminal device and the source network device, and the running duration of the third timer is duration that is during running of the second timer and that is from time when the terminal triggers reporting of a measurement report to time when synchronization between the terminal and the source access network device is resumed.

According to a fourth aspect, this application provides an information recording method, including: A terminal hands over from a source cell of a source access network device to a target cell of a target access network device. The terminal records a first report. The first report includes potential handover failure information in a process in which the terminal hands over from the source cell to the target cell. The potential handover failure information includes user plane interruption time information. The user plane interruption time information includes first time information or second time information. The first time information indicates duration from time of last data transmission between the terminal and the source access network device to time of first data transmission between the terminal and the target access network device. The second time information indicates duration from the time of the last data transmission between the terminal and the source access network device to time when the terminal determines to send the first report to the target network device, or indicates duration from the time of the last data transmission between the terminal and the source access network device to time when the terminal sends the first report to a first access network device.

Optionally, the first report further includes indication information indicating a type of the user plane interruption time information.

The user plane interruption information is added to the first report, to resolve a problem that when no data transmission exists between the terminal and the target access network device, the terminal cannot accurately report the user plane interruption time information because the terminal does not know cut-off time of interruption of a user plane connection.

In a possible implementation, the potential handover failure information in the first report in the first aspect to the third aspect may include the user plane interruption time information in the fourth aspect. Details are not described.

According to a fifth aspect, this application provides an information transmission method, including: A terminal hands over from a source cell of a source access network device to a target cell of a target access network device. The terminal encounters a radio link failure (radio link failure, RLF) in the target cell. The terminal records RLF information, where the RLF information includes conditional handover (conditional handover, CHO) configuration information, and the RLF information indicates a cell corresponding to the CHO configuration information.

In a possible implementation of the fifth aspect, the method further includes: The terminal sends the RLF information to the source access network device or the target access network device, or the terminal sends the RLF information to the source access network device or the target access network device via a first access network device.

In a possible implementation of the fifth aspect, the RLF information includes first indication information, where the first indication information is used to determine the cell corresponding to the CHO configuration information.

In a possible implementation of the fifth aspect, when the CHO configuration information includes a first CHO configuration and a second CHO configuration, the RLF information further includes indication information indicating cell identifiers respectively corresponding to the first CHO configuration and/or the second CHO configuration.

In a possible implementation of the fifth aspect, the cell corresponding to the CHO configuration information is predefined as the source cell; or the cell corresponding to the CHO configuration information is predefined as the target cell.

In a possible implementation of the fifth aspect, when the CHO configuration information includes the first CHO configuration and the second CHO configuration, it is predefined that recording orders of the first CHO configuration and the second CHO configuration in the RLF information respectively indicate a cell corresponding to the first CHO configuration and a cell corresponding to the second CHO configuration, or the RLF information includes second indication information and/or third indication information, where the second indication information indicates a cell corresponding to the first CHO configuration, and/or the third indication information indicates a cell corresponding to the second CHO configuration.

According to a sixth aspect, this application provides an information transmission method, including: A transmission node receives RLF information from a terminal, where the RLF information includes a first CHO configuration and/or includes a second CHO configuration. The transmission node determines that the first CHO configuration corresponds to a source cell of a source access network device, and/or determines that the second CHO configuration corresponds to a target cell of a target access network device.

Optionally, the transmission node includes a central unit and a distributed unit. That a transmission node receives RLF information from a terminal includes: The central unit receives the RLF information, and sends some or all of the RLF information to the distributed unit.

In a possible implementation of the sixth aspect, the method further includes: The transmission node sends some or all of the RLF information to the source access network device or the target access network device.

In a possible implementation of the sixth aspect, the method further includes: The transmission node sends, to the source access network device or the target access network device, indication information indicating a type of the RLF information, where the type of the RLF information is determined based on a radio access technology of a cell in which an RLF is generated.

Optionally, that the transmission node sends some or all of the RLF information to the source access network device or the target access network device includes: The transmission node sends some or all of the RLF information through a communication interface between the transmission node and the source access network device or the target access network device; or the transmission node sends some or all of the RLF information to the source access network device or the target access network device through a core network.

In a possible implementation of the sixth aspect, the transmission node is the source access network device, and the RLF information includes the first CHO configuration and the second CHO configuration. Before the RLF information is sent to the target access network device, the method further includes: The transmission node deletes the first CHO configuration.

In a possible implementation of the sixth aspect, the transmission node is the target access network device, and the RLF information includes the first CHO configuration and the second CHO configuration. Before the RLF information is sent to the source access network device, the method further includes: The transmission node deletes the second CHO configuration.

According to the method in the fifth aspect or the sixth aspect, CHO configuration information recorded by the terminal in the RLF information may be associated with a corresponding cell, so that the transmission node that receives the RLF information can learn of, based on the RLF information reported by the terminal, the cell corresponding to the CHO configuration information, and perform corresponding mobility optimization on the cell.

According to a seventh aspect, this application further provides a communication apparatus, including a unit, a module, or a means (means) configured to perform the steps in the first aspect, the second aspect, the fourth aspect, or the fifth aspect. The communication apparatus may be a terminal or an apparatus used in the terminal.

According to an eighth aspect, this application further provides a communication apparatus, including a unit, a module, or a means (means) configured to perform the steps in the third aspect or the sixth aspect. The communication apparatus may be a network device or an apparatus used in the network device. The network device may be a base station or a device that has some functions of the base station.

According to a ninth aspect, this application further provides a communication apparatus, including a processor and an interface circuit. The processor is configured to: communicate with another apparatus through the interface circuit, and perform the methods provided in the first aspect to the sixth aspect. There are one or more processors.

According to a tenth aspect, this application further provides a communication apparatus, including a processor, configured to invoke a program stored in a memory, to perform the methods provided in the first aspect to the sixth aspect. The memory may be located inside or outside the apparatus. In addition, there may be one or more processors.

According to an eleventh aspect, this application further provides a computer program product. When the program is invoked by a processor, the method provided in any one of the foregoing aspects is performed.

In addition, a computer-readable storage medium is provided, and includes the foregoing program.

According to a twelfth aspect, this application provides a communication system, including a terminal and a transmission node. The terminal is configured to perform the method provided in any one of the first aspect, the second aspect, the fourth aspect, or the fifth aspect. The transmission node is configured to perform the method provided in the third aspect or the sixth aspect.

### BRIEF DESCRIPTION OF DRAWINGS

FIG. 1 is a schematic of a communication system 100 according to an embodiment of this application;
FIG. 2 is a flowchart of an information recording method according to an embodiment of this application;
FIG. 3 is a flowchart of an information recording method according to an embodiment of this application;
FIG. 4a is a flowchart of an information transmission method according to an embodiment of this application;
FIG. 4b is a flowchart of an information transmission method according to an embodiment of this application;
FIG. 5 is a flowchart of an information recording method according to an embodiment of this application;
FIG. 6 is a schematic of a communication apparatus 600 according to an embodiment of this application;
FIG. 7 is a schematic of a network device 700 according to an embodiment of this application; and
FIG. 8 is a schematic of a terminal 800 according to an embodiment of this application.

### DESCRIPTION OF EMBODIMENTS

Technologies described in embodiments of this application may be used for a plurality of communication systems, for example, a 5th generation (5th generation, 5G) mobile communication system like a long term evolution (long term evolution, LTE) system, an enhanced long term evolution (enhanced long term evolution, eLTE) system, or a new radio (new radio, NR) system, or another next generation (next generation, NG) communication system or new communication system. This is not limited in this application.

In this application, a terminal may be various devices that provide voice and/or data connectivity for a user, and may also be referred to as a terminal device, user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, an aerospace device, or the like. In embodiments of this application, a chip used in the foregoing device may also be referred to as a terminal. In this application, the UE is used as the terminal for description.

In this application, a network device may be an access network device, for example, a base station. For example, the network device may be various types of base stations, for example, an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, or a base station in a future mobile communication system, or may be a module or a unit that completes some functions of a base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications of the 3rd generation partnership project (3rd Generation Partnership Project, 3GPP). The CU and the DU may jointly complete the functions of the base station. In addition, a function of the CU may be implemented by a plurality of entities. For example, the function of the CU may be further divided. For example, functions of a control plane (control plane, CP) and a user plane (user plane, UP) of the CU are separated, to form a CU control plane (CU-CP) and a CU user plane (CU-UP). For example, the CU-CP and the CU-UP may be implemented by different function entities, and are connected through an E1 interface. The CU-CP and the CU-UP may be coupled to the DU. The network device may be a macro base station, may be a micro base station or an indoor base station, or may be a relay node, a master node, or the like. A specific technology and a specific device form that are used by the network device are not limited in embodiments of this application. In this application, the base station is used as the network device for description.

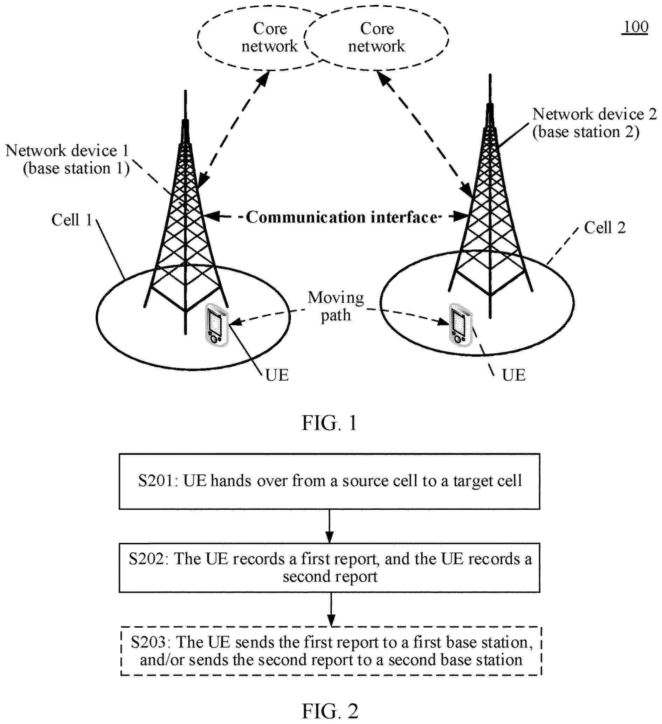

FIG. 1 is a schematic of a communication system 100 according to an embodiment of this application.

As shown in FIG. 1, the communication network 100 includes a base station 1 and a base station 2. The base station 1 and the base station 2 may directly communicate with each other, or may indirectly communicate with each other via another network device. The base station 1 and the base station 2 may use a same radio access technology (radio access technology, RAT) or different radio access technologies. In other words, standards of the base station 1 and the base station 2 may be the same or different. The base station 1 and the base station 2 may be connected to a same core network, or may be connected to different core networks, and communication may be performed between the core networks.

The base station 1 and the base station 2 separately manage one or more cells, one or more terminals may be covered in a coverage area of each cell, and the terminal accesses the base station through the cell and obtains a communication service. In FIG. 1, that the base station 1 manages a cell 1, and the base station 2 manages a cell 2 is used for description. When entering the cell 1, UE may access the cell 1, and obtain a communication service of the base station 1 through the cell 1. A cell handover may occur in a moving process of the UE. For example, when the UE moves to the cell 2, the UE may hand over from the cell 1 to the cell 2, disconnect from the cell 1, access the cell 2, and obtain a communication service of the base station 2 through the cell 2. In a process in which the UE hands over from the cell 1 to the cell 2, the cell 1 may be referred to as a UE source cell (a source cell for short), the cell 2 may be referred to as a UE target cell (a target cell for short), the base station 1 may be referred to as a UE source base station (a source base station for short), and the base station 2 may be referred to as a UE target base station (a target base station for short).

In an example of a handover manner (manner 1), the handover of the UE is controlled by a base station (that is, the source base station) that is currently accessed by the UE or currently serves the UE. A handover procedure includes: The source base station may indicate the UE to perform cell measurement, and determine, based on a measurement report reported by the UE, whether to hand over a serving cell of the UE; and if the source base station determines to hand over the serving cell of the UE, the source base station sends a handover request message to the target base station that is to be handed over to. If the target base station allows access of the UE, the target base station sends a handover acknowledgment message to the source base station. One of determining bases for the source base station to determine whether to hand over a cell on which the UE camps is a cell handover trigger threshold. If signal quality of a neighboring cell reported by the UE reaches or exceeds the cell handover trigger threshold, the source base station determines that the UE can hand over to the neighboring cell. Further, the source base station sends a radio resource control (radio resource control, RRC) reconfiguration message including a handover configuration to the UE, to indicate the UE to hand over from the source cell to the target cell. That the UE attempts to access the target cell based on the handover configuration sent by the source base station includes initiating random access to the target cell. If the random access succeeds, the UE accesses the target cell. The handover process may be referred to as an ordinary handover (ordinary handover, ordinary HO) or a legacy handover (legacy handover, legacy HO).

In an example of another handover manner (manner 2), to reduce system overheads, and improve handover efficiency, a conditional handover (conditional handover, CHO) manner is proposed. The conditional handover is that the UE performs a handover when some CHO conditions are met. Specifically, that the UE may determine to select a candidate target cell that meets the CHO conditions from candidate target cells provided on a network side, and perform the handover includes: After receiving a CHO configuration of a candidate cell, the UE starts to evaluate whether the candidate cell meets the handover condition. When the UE determines one candidate cell that meets a corresponding handover condition or the UE selects one candidate cell based on a condition, for example, cell signal quality, from a plurality of candidate cells that meet a corresponding handover condition, the UE performs a procedure of handing over to the candidate cell. The procedure includes initiating random access to the candidate cell. If the random access succeeds, the UE accesses the candidate cell. In addition, the UE stops evaluating the handover condition after performing the handover.

In addition, there are handover manners such as a dual active protocol stack (dual active protocol stack, DAPS) handover, a make-before-break (make-before-break, MBB) handover, an enhanced make-before-break (enhanced MBB, eMBB) handover, and a random access channel less (random access channel less, RACH-less) handover.

The UE may hand over to the target cell in any one of the foregoing manners. However, even if the UE successfully completes the handover, a potential problem that may cause a handover failure of the UE in the future still exists in the handover process. To enable the network side to identify such a potential problem, the UE may record a related parameter or information in a handover success process, generate an SHR, and report the SHR to the network side. For example, after obtaining the SHR, the source base station may perform mobility optimization on the UE with reference to a UE context, to avoid the handover failure in the future.

A reason for triggering of the SHR may be that a timing result based on any one of the following timers reaches a preset threshold:
Timer 1: Running duration of the timer 1 is duration from time when the UE receives a handover indication sent by the source base station or the UE starts to perform the CHO based on a stored CHO configuration to time when the UE successfully completes random access to the target cell. The UE starts the timer 1 when receiving the handover indication or starting to perform the CHO. When the running duration of the timer 1 is greater than or equal to a threshold 1, the terminal device determines that a handover failure occurs. When the running duration of the timer 1 is greater than or equal to a threshold 2, although the UE finally accesses the target cell, the UE determines that a potential handover failure exists, and recording of the SHR is triggered, where the threshold 1 is greater than the threshold 2. The timer 1 may be referred to as a T304 timer. A reason why the running duration of the timer 1 is greater than or equal to the threshold 2 may be that a beam resource of the target cell that the UE prepares to access is insufficient, or a preamble allocated by the target base station to the UE is not applicable to the UE for random access. As a result, the UE attempts to initiate random access to the target cell for a plurality of times before accessing the target cell. Alternatively, the reason may be that the UE hands over to the target cell excessively early, in other words, the UE performs a premature handover (premature handover). Because channel quality of the source cell is poor, the UE hands over to the target cell excessively early. However, because channel quality of the target cell is not good enough for the UE to access, the UE can access the target cell only after the channel quality of the target cell improves. The handover indication sent by the source base station may be the RRC reconfiguration message.
Timer 2: Running duration of the timer 2 is duration in which the UE detects that a physical layer problem exists between the UE and the source base station, where the physical layer problem includes that a quantity of times that the UE receives a downlink out-of-synchronization indication of the source base station exceeds a preset threshold X. After the timer 2 is started, if a radio link between the UE and the source base station is restored, the timer 2 is stopped. If the running duration of the timer 2 is greater than or equal to a threshold 3, the UE determines that a failure occurs on a radio link between the UE and a base station to which a connection has been established, for example, the source base station. If the running duration of the timer 2 is greater than or equal to a threshold 4, the UE determines that a possibility of a radio link failure exists between the UE and the source base station, and recording of the SHR is triggered, where the threshold 3 is greater than the threshold 4. The timer 2 may be referred to as a T310 timer. A reason why the running duration of the timer 2 is greater than or equal to the threshold 4 includes: Quality of the radio link between the UE and the source cell is poor, and downlink out-of-synchronization occurs in the source cell before the UE completes the handover. Therefore, the possibility of the radio link failure exists. A reason why the quality of the radio link between the UE and the source cell deteriorates may be that the UE hands over to the target cell excessively late, in other words, the UE performs a delayed handover (delayed handover). Because a connection between the UE and the source base station is maintained for excessively long time, the channel quality of the source cell may deteriorate during this period.
Timer 3: The timer 3 is started during running of the timer 2. Running duration of the timer 3 is duration from time when the UE triggers a measurement report to time when the quantity of times that the UE receives the downlink out-of-synchronization indication of the source base station exceeds a preset threshold Y The threshold Y may be the same as or different from the foregoing threshold X. When the running duration of the timer 3 is greater than or equal to a threshold 5, the UE determines that a failure occurs on a radio link between the UE and the base station to which the connection has been established, for example, the source base station. When the running duration of the timer 3 is greater than or equal to a threshold 6, the UE determines that a possibility of a radio link failure exists between the UE and the source base station, and recording of the SHR is triggered, where the threshold 5 is greater than the threshold 6. The timer 3 may be referred to as a T312 timer. A reason why the running duration of the timer 3 is greater than or equal to the threshold 6 is similar to the reason why the running duration of the timer 2 is greater than or equal to the threshold 4. Details are not described. Optionally, the SHR includes information such as indication information of a timer that triggers the UE to record the SHR, location information of the UE, and a measurement result of the signal quality of the neighboring cell during the handover of the UE. Optionally, the SHR triggered by the timer 1 may include a related parameter or information (random access information for short) in a process in which the UE initiates random access (random access, RA) to the target cell, for example, reuse an information element *RA-InformationCommon* in a random access report, where the information element includes information such as a subcarrier spacing used in an initial access process and a start frequency of a message 1 (MSG 1) in the random access process.

The SHR is reported on the premise that the UE successfully accesses the target cell, in other words, no failure occurs on random access between the UE and the target cell. Therefore, the UE records the random access report and reports the random access report to an access network device currently accessed by the UE, for example, the target base station. The random access report includes related parameters or information in the process in which the UE performs random access to the target cell, for example, a cell identifier of the target cell, a frequency number used by the UE for an attempt of access, a reason for the random access, and the information element *RA-InformationCommon.* The reason for the random access may include that the UE needs to access a cell, uplink out-of-synchronization occurs between the UE and the source cell, the UE requests system information, or the like.

In this application, the foregoing SHR or random access report may be collectively referred to as a self-organizing network (self-organizing network, SON) SON report, and a parameter recorded in the SON report may be referred to as a mobility parameter.

It can be learned that content of the SHR and the random access report may be repeated. However, if a base station (the source base station or the target base station) that receives the SHR and the random access report cannot identify that the SHR and the random access report are related to a same target cell, the base station separately adjusts a same mobility parameter based on the content of the SHR and the random access report. This causes excessive adjustment of the parameter, and a failure to achieve a mobility optimization effect. In addition, even if the SHR does not include random access information, provided that the SHR is triggered, it indicates that the process in which the UE initiates random access to the target cell has a potential failure possibility. Therefore, the network side also needs to identify the random access report, to avoid improper adjustment of the parameter or information in the random access report.

The following describes methods provided in this application with reference to FIG. 2 to FIG. 4a, FIG. 4b, and FIG. 5. The methods provided in this application may be performed by a terminal or a network device, or may be performed by a communication apparatus, for example, a chip used in the terminal or an access network device. The methods provided in this application may be applied to the communication system shown in FIG. 1. The following describes an information recording method provided in this application by using an example in which a terminal is UE and an access network device is a base station.

FIG. 2 is a schematic flowchart of an information recording method according to this application. The method includes the following steps.

S201: UE hands over from a source cell to a target cell.

The source cell is managed by a source base station, and the target cell is managed by a target base station. The UE may hand over to the target cell in any handover manner, for example, the foregoing manner 1 or manner 2. A handover process is not described in detail.

S202: The UE records a first report, and the UE records a second report.

The first report includes potential handover failure information in a process in which the UE hands over from the source cell to the target cell, and identification information of the UE in the target cell.

The second report includes related information in a process in which the UE performs random access to the target cell, and the identification information of the UE in the target cell.

The identification information of the UE in the target cell includes a cell radio network temporary identifier (cell radio network temporary identifier, C-RNTI) or a temporary C-RNTI (temporary C-RNTI) of the UE in the target cell.

The first report or the second report may be considered as a set or a combination of information. A name and a form of the first report or the second report are not limited in this application. For example, the first report may be an SHR, and the second report may be a random access report. For descriptions of the SHR and the random access report, refer to the foregoing descriptions. Details are not described. In addition, a sequence of recording the first report and recording the second report by the UE is not limited in this application.

Optionally, the method further includes S203: The UE sends the first report to a first base station, and/or sends the second report to a second base station.

Optionally, the first base station is the source base station or the target base station, and the second base station is the source base station or the target base station. In other words, the UE may directly send the first report to the source base station or the target base station, and may also directly send the second report to the source base station or the target base station.

Optionally, the first base station or the second base station may be a base station currently accessed by the UE other than the source base station/target base station. Because reporting of the first report and the second report may be delayed, after handing over from the target base station to another base station, the UE may report, to the base station, the first report and/or the second report related to the process in which the UE hands over to the target base station. For the base station, the first report or the second report records information related to a historical handover of the UE. Further, the base station may forward, to the source base station or the target base station, the first report and/or the second report received from the UE.

It may be understood that, in this application, a sequence of reporting the first report and the second report by the UE is not limited, and whether the first report and the second report are received by a same base station is not limited, in other words, the first base station and the second base station may be a same base station or different base stations. Optionally, the UE reports the first report and the second report to a same base station by using a same message or different messages. For example, after accessing the target base station, the UE reports the first report and the second report to the target base station by using one message.

In this application, a base station that receives the first report and/or the second report is referred to as a receiving base station. When the receiving base station is not the target base station or the source base station of a handover process related to the first report/second report, the receiving base station may forward the first report and/or the second report to the target base station or the source base station. In this application, a receiving base station that performs a behavior of forwarding the first report and/or the second report may also be referred to as a forwarding base station, and a base station that receives the forwarded first report and/or second report may also be referred to as an aim base station (aim base station). It may be understood that the aim base station is also the foregoing receiving base station. In addition, after receiving the forwarded first report and/or second report, the target base station/source base station may further forward the first report and/or the second report to the source base station/target base station.

Optionally, a reason for triggering the UE to record the first report may be that a timer times out, and includes: Running duration of one or more of the foregoing timer 1, timer 2, or timer 3 exceeds a corresponding preset threshold. Details are not described.

If recording of the first report is triggered by the timer 1, the first report may include the related information in the process in which the UE performs the random access to the target cell, for example, information in the foregoing information element *RA-InformationCommon.*

Optionally, when recording of the first report is triggered based on the timer 1, the first report or the second report further includes any one or more of the following information: indication information #1, where the indication information #1 indicates whether the running duration of the timer 1 exceeds a first threshold (for example, the foregoing threshold 2); time information indicating the process in which the UE performs the random access to the target cell, where the time information may be duration of the random access process or start and end time points of the random access process; or information about the running duration of the timer 1. The indication information #1 may be one bit. When the running duration of the timer 1 exceeds the first threshold, a value of the bit is 1; or otherwise, a value of the bit is 0.

Optionally, in an implementation, the first report or the second report does not need to include the indication information #1, and other information in the first report or the second report may be used to implicitly indicate that the running duration of the timer 1 exceeds the first threshold.

Optionally, in an implementation, the UE indicates, based on a reason for a potential handover failure, the forwarding base station (first base station/second base station) to forward the first report/second report to the source base station and/or the target base station. Specifically, the UE may determine that the potential handover failure is related to the target cell, related to the source cell, or related to both the target cell and the source cell, to indicate the forwarding base station to correspondingly forward the first report/second report to a base station to which a cell related to the potential handover failure belongs. Optionally, if the first report includes both information related to a potential handover failure of the source cell and information related to a potential handover failure of the target cell, in other words, both the source cell and the target cell are related to the potential handover failure, the UE may indicate the forwarding base station to forward information related to the source cell in the first report to the source base station, and forward information related to the target cell in the first report to the target base station. Optionally, the UE sends an identifier of an aim cell (aim cell) to the forwarding base station, where the aim cell is a cell managed by the aim base station that receives the forwarded first report, and includes the foregoing source cell or target cell. Identification information of the aim cell includes a cell global identifier (cell global identifier, CGI), or includes a CGI and a tracking area code (tracking area code, TAC). The identifier of the aim cell may be included in the first report, or may be included in a same message as the first report. Optionally, if the UE determines that the potential handover failure is related to both the target cell and the source cell, the UE may send an identifier of the source cell and an identifier of the target cell to the forwarding base station, and may further indicate content related to the source cell in the first report and content related to the target cell.

Optionally, the reason for the potential handover failure corresponds to the foregoing reason for triggering the UE to record the first report. For example, that the running duration of the timer 1 exceeds the preset threshold (for example, the foregoing threshold 2) may be caused because the UE hands over to the target cell excessively early, where the potential handover failure is related to the source cell, and in this case, the UE indicates the receiving base station to correspondingly forward the first report/second report to the source base station; or because a beam resource of the target cell is insufficient, or a preamble allocated by the target base station to the UE is not applicable to the UE for random access, where the potential handover failure is related to the target cell, and in this case, the UE indicates the forwarding base station to correspondingly forward the first report/second report to the target base station. When the running duration of the timer 2 or the timer 3 exceeds the preset threshold, it indicates that the potential handover failure is related to the source cell. For example, because quality of a radio link between the UE and the source cell is poor, downlink out-of-synchronization occurs in the source cell before the UE completes the handover. In this case, the UE indicates the forwarding base station to correspondingly forward the first report/second report to the source base station. For another example, a reason why the timer 1 exceeds the preset threshold is that the UE performs a premature handover and a beam resource of the target cell is insufficient, where the potential handover failure is related to both the source cell and the target cell. In this case, the first report includes information respectively related to the target cell and the source cell. Therefore, the UE may indicate the forwarding base station to forward the information related to the source cell in the first report to the source base station, and forward the information related to the target cell in the first report to the target base station.

Optionally, in an implementation, if whether the forwarding base station forwards the first report and/or the second report to the source base station or the target base station is pre-specified, for example, is predefined in a protocol, the UE does not need to determine the reason for the potential handover failure, but only needs to send the pre-specified identifier of the aim cell to the forwarding base station along with the first report.

According to the information recording method provided in this application, the identification information of the UE in the target cell is separately added to the first report and the second report, so that it can be determined that the first report and the second report are related to a same target cell. In this way, if a terminal reports the first report and the second report to a network side, after obtaining the first report and the second report, the source base station or the target base station may associate the first report with the second report based on the identification information, and may properly adjust a parameter included in both the first report and the second report, to avoid excessive adjustment of a mobility parameter, and improve an effect of mobility optimization on the terminal. In addition, because the first report is triggered due to the potential handover failure, even if the first report does not include a parameter that is the same as that in the second report, by associating the first report with the second report, the source base station or the target base station may learn that a potential failure possibility exists in the process in which the UE initiates the random access to the target cell, to properly adjust a mobility parameter in the second report.

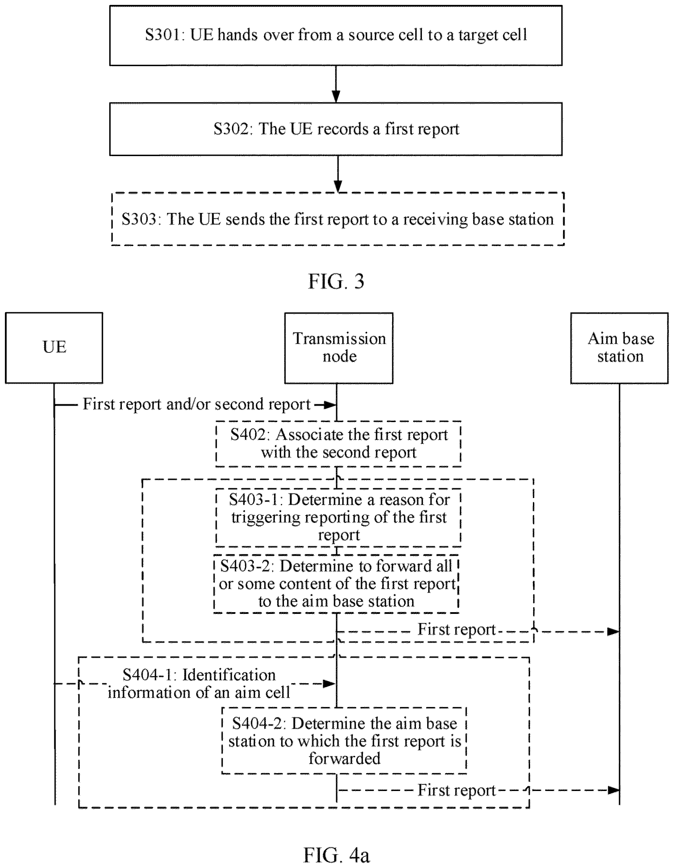

FIG. 3 is a schematic flowchart of an information recording method according to this application. The method includes the following steps.

S301: UE hands over from a source cell to a target cell.

The source cell is managed by a source base station, and the target cell is managed by a target base station. The UE may hand over to the target cell in any handover manner.

The source cell and the target cell may use different RATs. In other words, the UE may perform an inter-RAT handover, that is, inter-RAT handover. For example, the source cell is an LTE cell, and the target cell is an NR cell. This is not limited in embodiments. An RRC reconfiguration message sent by the source base station to the UE may indicate the UE to perform the inter-RAT handover. The source cell and the target cell may alternatively use a same RAT.

S302: The UE records a first report.

The first report includes potential handover failure information in a process in which the UE hands over from the source cell to the target cell. The first report may be an SHR. For detailed descriptions of the first report, refer to the foregoing related content, for example, the first report in the embodiment shown in FIG. 2. However, it should be noted that the first report in embodiments may include identification information of the UE in the target cell, or may not include identification information of the UE in the target cell. This is not limited.

The first report may be recorded based on formats corresponding to different RATs. For example, the first report may be recorded according to a format corresponding to NR or LTE. This may also be referred to as: The first report uses an NR format or an LTE format. If an RAT of a base station that receives the first report is the same as an RAT corresponding to the first report, the base station may correctly parse the first report. A format of the first report may be a format of RRC layer signaling that carries the first report. For example, designs of information elements in RRC layer signaling in different formats may be different.

Optionally, in an implementation, the UE records the first report according to a format corresponding to the RAT of the target cell. Optionally, the UE determines that a potential handover failure is related to the target cell, and the UE records the first report according to the format corresponding to the RAT of the target cell. For example, when a quantity of times that the UE attempts to access the target cell exceeds a threshold A, or quality of a communication link between the UE and the target cell is less than a threshold B, running duration of a timer 1 exceeds a preset threshold (the timer 1 times out), and recording of the first report is triggered. In this case, the UE records the first report according to the format corresponding to the RAT of the target cell.

Optionally, in an implementation, the UE records the first report according to a format corresponding to the RAT of the source cell. Optionally, the UE determines that a potential handover failure is related to the source cell. For example, when the UE performs a premature handover, running duration of a timer 1 exceeds a preset threshold, and recording of the first report is triggered. In this case, the UE records the first report according to the format corresponding to the RAT of the target cell. For another example, when the UE performs a delayed handover, or quality of a communication link between the terminal and the source cell is less than a threshold C, running duration of a timer 2 or a timer 3 exceeds a preset threshold (the timer 2 or the timer 3 times out), and recording of the first report is triggered. In this case, the UE records the first report according to the format corresponding to the RAT of the target cell. Optionally, the UE records the first report according to the format corresponding to the RAT of the source cell.

For detailed descriptions of the timer 1, the timer 2, and the timer 3, refer to the foregoing related content. Details are not described.

It may be understood that, because a reason for the timeout of the timer 1 may be related to the source cell, or may be related to the target cell, on the premise that the timer 1 times out, the UE may further determine a cell to which the reason for the timeout of the timer 1 is related, and determine the format of the first report based on an RAT of the cell related to the specific reason.

Optionally, in an implementation, it may be pre-specified, for example, predefined in a protocol, whether the UE records the first report according to the format corresponding to the RAT of the source cell or the RAT of the target cell. If the UE determines that the potential handover failure exists in both the source cell and the target cell, the UE may determine a recording format of the first report according to a pre-specification.

It may be understood that, if the source cell and the target cell use the same RAT, the UE records the first report according to a format corresponding to the RAT.

Optionally, the method further includes S303: The UE sends the first report to a receiving base station.

Optionally, the UE sends the first report based on a request of the receiving base station. The receiving base station may send, to the UE, a request message for requesting to report the first report.

The receiving base station may be the source base station or the target base station in the handover process related to the first report, or another base station accessed by the UE after the UE hands over from the target base station. For a specific meaning, refer to the descriptions of the receiving base station in the embodiment in the foregoing figure.

Optionally, in an implementation, the receiving base station may serve as a forwarding base station to forward the first report to an aim base station, that is, the source base station or the target base station. Optionally, an aim base station to which the receiving base station forwards the first report is indicated by the UE to the receiving base station. For example, the UE indicates, as predefined in a protocol, whether the receiving base station forwards the first report to the source base station or the target base station. For another example, the UE indicates, based on a reason for the potential handover failure, the receiving base station to forward the first report to the source base station and/or the target base station. The UE sends identification information of an aim cell to the receiving base station to indicate the aim base station. The aim cell is the source cell or the target cell. The identification information of the aim cell includes a CGI, or includes a CGI and a TAC, and may be included in the first report, or included in one message with the first report. For detailed descriptions of an example in which the UE indicates the aim base station to the receiving base station, refer to related content in the embodiment in FIG. 2. Details are not described.

It may be understood that, if whether the receiving base station forwards the first report to the source base station or the target base station is indicated by the UE, determining, by the UE, whether to use the format corresponding to the RAT of the source cell or the RAT of the target cell to record the first report corresponds to determining the aim base station by the UE. In other words, if the format of the first report is determined, the aim base station is correspondingly determined. In an implementation, when the UE records the first report according to the format corresponding to the RAT of the source cell as predefined in a protocol, the UE indicates, for example, by sending an identifier of the source cell to the receiving base station, the receiving base station to forward the first report to the source base station. When the UE records the first report according to the format corresponding to the RAT of the target cell as predefined in a protocol, the UE indicates, for example, by sending an identifier of the target cell to the receiving base station, the receiving base station to forward the first report to the target base station. In another implementation, if the UE determines whether to forward the first report to the source base station or the target base station, a basis for the UE to determine the aim base station is the same as a basis for the UE to determine the format for recording the first report, for example, based on the reason for the potential handover failure. Specifically, if the UE determines to record the first report based on the RAT of the source cell, it indicates that the potential handover failure is related to the source cell, and the UE may correspondingly indicate, for example, by sending an identifier of the source cell to the receiving base station, the receiving base station to forward the first report to the source base station. If the UE determines to record the first report based on the RAT of the target cell, it indicates that the potential handover failure is related to the target cell, and the UE may correspondingly indicate, for example, by sending an identifier of the target cell to the receiving base station, the receiving base station to forward the first report to the target base station.

Optionally, the UE indicates the format of the first report to the receiving base station. For example, the UE indicates, to a gNB, that the first report is in the LTE format or the NR format.

Optionally, if an RAT of the receiving base station is the same as the RAT used for recording the first report, the receiving base station may parse content of the first report, and the receiving base station may determine whether to forward the first report to the source base station or the target base station by parsing the first report, for example, by obtaining the identification information of the aim cell included in the first report, or based on whether a mobility parameter in the first report is related to the source cell or the target cell.

Optionally, the UE encapsulates the first report into a container (container) in one message, and sends the message to the receiving base station. The UE may further send the identification information of the aim cell in the first report to the receiving base station. The aim cell is the source cell or the target cell. The receiving base station does not parse the container in the message, but determines, by obtaining the identification information that is of the aim cell and that is sent by the UE, to forward the container to a base station to which the aim cell belongs. The identification information of the aim cell and the container may be located in a same message. It may be understood that whether the RAT of the receiving base station is the same as an RAT corresponding to the format of the first report is not limited in this implementation.

According to the information recording method shown in FIG. 3, if the UE triggers reporting of the first report during the inter-RAT handover, the UE may record the first report according to a format corresponding to an RAT of a cell (the source cell or the target cell) related to the potential handover failure, and the UE sends identification information of the cell related to the potential handover failure to the receiving base station of the first report, so that the receiving base station can forward, in a correct and timely manner, a first report matching the RAT of the source cell to the source base station, and forward a first report matching the RAT of the target cell to the target base station, to avoid a problem that the first report cannot be correctly parsed because the format of the first report does not match the RAT of the source base station or the target base station that receives the first report. The source base station or the target base station may parse the first report, to obtain the reason for the potential handover failure, and perform mobility optimization on the UE in a timely manner.

Optionally, in an implementation, the information recording method shown in FIG. 3 may be combined with the information recording method shown in FIG. 2, for example, including: A manner in which the UE records the first report in S202 may be performed according to the implementation described in S302. A manner in which the UE sends the first report to the first base station in S203 may be performed according to the implementation described in S303. Details are not described. In addition, meanings of same terms in the embodiments shown in FIG. 2 and FIG. 3 are the same or similar, and mutual reference may be made to each other. Details are not described.

Optionally, in an implementation of this application, the potential handover failure information in the first report recorded by the UE in S202 or S302 includes user plane interruption time information.

Optionally, the method further includes: The UE sends, to the receiving base station, the first report that includes the user plane interruption time information.

The receiving base station may be the source base station or the target base station in the handover process related to the first report, or another base station accessed by the UE after the UE hands over from the target base station. For a specific meaning, refer to the descriptions of the receiving base station in the embodiment in FIG. 2 or FIG. 3.

User plane interruption time may be interruption time of data transmission between the UE and an access network device, for example, interruption time of data transmission between the UE and the source base station in the handover process, or time in which no data transmission or no successful data transmission exists between the UE and the access network device. The terminal time of the data transmission is interruption time of a data transmission layer.

The user plane interruption time information includes first time information or second time information.

The first time information indicates duration from time of last data transmission between the UE and the source base station to time of first data transmission between the UE and the target base station.

The second time information indicates duration from the time of the last data transmission between the UE and the source base station to time when the UE determines to send the first report to the target base station, or the second time information indicates duration from the time of the last data transmission between the UE and the source base station to time when the UE sends the first report to the target base station. In other words, cut-off time of the second time information is time at which the UE sends the first report to the target base station, or the UE determines to send the first report to the target base station. For descriptions of the first report, refer to related content in the embodiment shown in FIG. 2 or FIG. 3. Details are not described.

Optionally, the UE further sends, to the target base station, indication information #A indicating that the user plane interruption time information is the first time information or the second time information. The indication information #A may be included in the first report, or included in a same message as the first report.

Optionally, if the UE does not send the indication information #A to the target base station, after receiving the first report, the target base station may determine, based on a status of data transmission between the target base station and the UE, whether the user plane interruption time information in the first report is the first time information or the second time information. Further, if the target base station determines to forward the first report to the source base station, the target base station may send indication information #B to the source base station. The indication information #B indicates whether the user plane interruption time information in the forwarded first report is the first time information or the second time information. In other words, a function of the indication information #B is similar to that of the indication information #A. Details are not described.

According to this implementation, the user plane interruption time information that includes the first time information or the second time information is added to the first report, to resolve a problem that when no data transmission exists between the UE and the target base station, the UE cannot accurately report the user plane interruption time information because the UE does not know cut-off time of interruption of a user plane connection. It may be understood that this implementation may alternatively be implemented independently, and is decoupled from the embodiments shown in FIG. 2 and FIG. 3.

FIG. 4a is a schematic flowchart of an information transmission method according to this application. In the information transmission method, the method provided in this application is described from a perspective of a network side, where a process of how a receiving base station that receives the first report/second base station in the embodiments shown in FIG. 2 and FIG. 3 processes the first report and forwards the first report/second report to a source base station or a target base station is described. The following describes the information transmission method by using a transmission node as an execution body. It may be understood that the transmission node may be a base station or another access network device that has a function of the base station. The following uses an example in which the transmission node is the base station for description. The transmission node may be the receiving base station of the first report/second base station in the embodiments shown in FIG. 2 and FIG. 3. For descriptions of the receiving base station, refer to related content in the foregoing embodiments.

The method includes the following steps.

S401: The transmission node receives the first report and/or the second report from UE.

The first report includes potential handover failure information in a process in which the UE hands over from a source cell of the source base station to a target cell of the target base station. Optionally, the potential handover failure information includes user plane interruption time information. The second report includes related information in a process in which the UE performs random access to the target cell. Optionally, the first report and the second report separately include identification information of the UE in the target cell. For detailed descriptions of the first report and the second report, refer to related content of the first report and the second report in the embodiments shown in FIG. 2 and FIG. 3.

Optionally, in an implementation, if the transmission node is the source base station or the target base station, and the transmission node receives the first report and the second report, the method further includes S402: The transmission node associates the first report with the second report based on the identification information that is of the UE in the target cell and that is separately included in the first report and the second report.

Because the first report or the second report is related to the source base station or the target base station, when the transmission node is the source base station or the target base station, the first report is associated with the second report, so that excessive adjustment performed by the transmission node on a mobility parameter in the access process can be avoided, and a mobility optimization effect can be improved.

Optionally, in an implementation, the source base station or the target base station may adjust, based on the received first report and/or second report, the mobility parameter in the process in which the UE accesses the target cell, to perform mobility optimization on the UE. For example, if it is determined, based on the first report, that a preamble allocated by the target base station to the UE is inappropriate, the target base station may re-detect an access status of an SSB, and select an appropriate preamble for subsequent random access of the UE. If it is determined, based on the first report, that the UE hands over to the target cell excessively early or excessively late, the source base station may consider changing handover time for a subsequent handover of the UE to the target cell.

Optionally, in an implementation, the transmission node may serve as a forwarding base station to forward the first report/second report to an aim base station. For example, the transmission node is another base station accessed by the UE after the UE hands over from the target base station.

Optionally, the transmission node may determine, based on a reason for triggering the first report, the aim base station to which the first report is forwarded. Specifically, the method further includes the following steps.

S403-1: The transmission node determines, based on information in the first report, the reason for triggering reporting of the first report.

S403-2: The transmission node determines, based on the reason for triggering the reporting of the first report, to forward all or some content of the first report to the aim base station.

The aim base station includes the target base station and/or the source base station.

The first report may include information about a timer that triggers the first report. When the transmission node determines that recording of the first report is triggered because running duration of a timer 1 exceeds a preset threshold (for example, the foregoing threshold 2), it indicates that a potential handover failure may be related to the target cell. For example, the timer 1 times out because the UE attempts to initiate random access to the target cell for a plurality of times. The transmission node may forward the first report to the target base station. Alternatively, a potential handover failure is related to both the source cell and the target cell. For example, the timer 1 times out because the UE performs a premature handover and the UE attempts to initiate random access to the target cell for a plurality of times. The transmission node sends content related to the source base station in the first report to the source base station, and sends content related to the target base station in the first report to the target base station. When the transmission node determines that recording of the first report is triggered because running duration of a timer 2 exceeds a preset threshold (for example, the foregoing threshold 4) or running duration of a timer 3 exceeds a preset threshold (for example, the foregoing threshold 6), it indicates that a potential handover failure is related to the source cell. For example, the UE performs a delayed handover. The transmission node may send the first report to the source base station. For detailed descriptions of the timer 1, the timer 2, and the timer 3, refer to the foregoing related content.

Optionally, the transmission node does not need to determine the reason for triggering the first report, but forwards the first report to an aim base station that is pre-specified, for example, pre-specified in a protocol. Specifically, the transmission node may forward the first report to the source base station, and the source base station determines whether to send some or all content of the first report to the target base station. For example, if the source base station determines, based on the content of the first report, that the first report is triggered by the timer 1, and the potential handover failure occurs because the preamble allocated by the target base station to the UE is inappropriate, the source base station forwards the first report to the target base station. Alternatively, the transmission node forwards the first report to the target base station, and the target base station determines whether to send some or all content of the first report to the source base station. For example, if the target base station determines, based on the content of the first report, that the first report is triggered by the timer 2 or the timer 3, and the potential handover failure occurs because the UE hands over to the target cell excessively late, the target base station forwards the first report to the source base station. A specific manner of how the source base station or the target base station determines to forward the first report is similar to that in the step S403-1 and step S403-2. Details are not described.

In an implementation, if the first report is triggered by the timer 1, and the transmission node first sends the first report to the source base station, the source base station may not send the first report to the target base station. The target base station may receive, from the UE, the related information in the process in which the UE performs the random access to the target cell, for example, receive the foregoing second report, and the first report triggered by the timer 1 includes the related information in the process in which the UE performs the random access to the target cell. Therefore, the source base station does not need to send the first report to the target base station, to prevent the target base station from repeatedly obtaining the related information in the foregoing random access process, and save resources.

In an implementation, the transmission node forwards the first report based on an indication of the UE. The method further includes the following steps in place of S403-1 and S403-2.

S404-1: The transmission node receives identification information of an aim cell from the UE.

S404-2: The transmission node determines, based on the identification information of the aim cell, the aim base station to which the first report is forwarded.

The aim cell is the source cell or the target cell. In this implementation, the UE has determined the aim base station to which the first report is forwarded, and the transmission node does not need to determine the reason for triggering the first report, but only needs to forward the first report based on the identification information of the aim cell. When the aim cell is the source cell, the transmission node forwards the first report to the source base station. When the aim cell is the target cell, the transmission node forwards the first report to the target base station. When the UE sends identifiers of the source cell and the target cell, the transmission node separately forwards the first report to the source base station and the target base station, or forwards content related to the source base station in the first report to the source base station, and forwards content related to the target base station in the first report to the target base station.

Optionally, when forwarding the first report to the aim base station, the transmission node may further indicate a format of the first report.

Optionally, if the format of the first report received by the transmission node matches an RAT of the transmission node, where for example, the format of the first report is an NR format, and the transmission node is a gNB, the first report includes the identification information of the aim cell of the first report. The transmission node obtains the identification information of the aim cell by parsing the first report, to forward the first report to a base station corresponding to the identification information.

Optionally, if the format of the first report received by the transmission node does not match an RAT of the transmission node, where for example, the format of the first report is an NR format, and the transmission node is an eNB, the first report is included in a container of one message sent by the UE to the transmission node, and the message further includes the identification information of the aim cell outside the container. The transmission node does not need to parse the content of the first report, and may forward the first report to a base station corresponding to the identification information by obtaining the identification information of the aim cell in the message.

According to the foregoing implementation, the transmission node may forward, in a timely and accurate manner, the first report to an aim base station (the source base station and/or the target base station) related to the potential handover failure, so that the aim base station can adjust, in a timely manner, a mobility parameter related to the first report, to improve an effect of mobility optimization on the terminal.

Optionally, in an implementation, the transmission node sends all or some information in the first report/second report to the aim base station through a communication interface between the transmission node and the aim base station.

The interface between the transmission node and the aim base station may be an X2 interface or an Xn interface. For example, the receiving base station may send all or some information in the first report to the aim base station by using one or more messages transmitted through the X2 interface or the Xn interface, for example, a radio link failure indication (radio link failure, RLF indication) message, a handover report (handover report) message, or an access and mobility indication (access and mobility indication) message.

Optionally, in an implementation, the transmission node sends all or some information in the first report/second report to the aim base station via a core network device.

If the transmission node cannot directly communicate with the aim base station, the transmission node may send the first report to the aim base station via the core network device. Specifically, the transmission node may send some or all information in the first report to the core network device through an S1 or NG interface, and the core network device may forward, to the aim base station through the S1 or NG interface, the information received from the transmission node. For example, the transmission node may send the first report to the core network device by using one or more messages transmitted through the S1 interface or the NG interface, for example, an uplink RAN configuration transfer (configuration transfer) message, a downlink RAN configuration transfer message, a base station configuration transfer message, or a core network device configuration transfer message, and the core network device may also forward the first report to the aim base station by using one or more messages transmitted through the S1 interface or the NG interface. Details are not described.

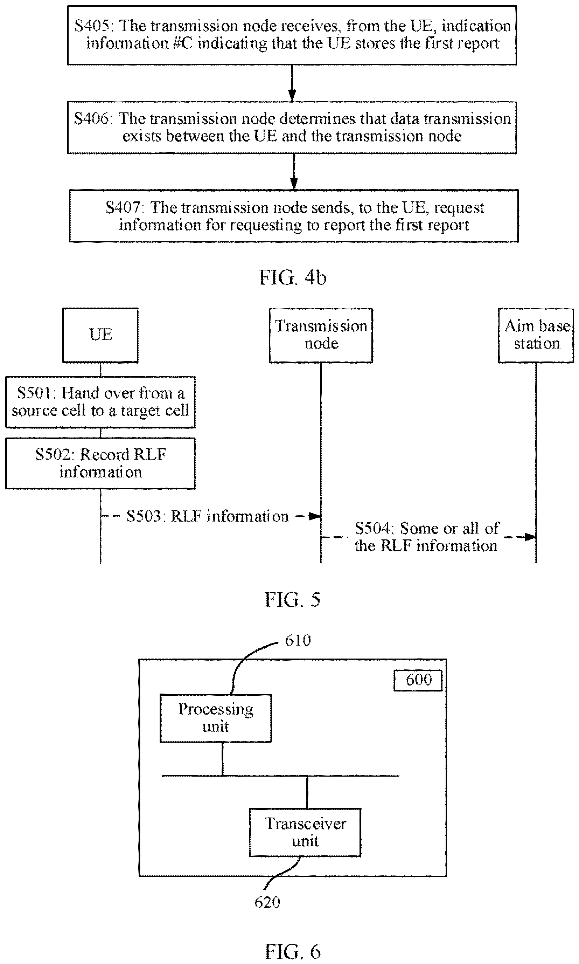

It may be understood that, regardless of whether the first report is directly received from the transmission node, or the first report forwarded via the core network device is received, the information in the first report received by the aim base station may be transmitted by using one message, or separately transmitted by using a plurality of messages of a same type or different types. This is not limited. Optionally, in an implementation, as shown in FIG. 4b, before the transmission node receives the first report/second report, the method further includes the following steps.

S405: The transmission node receives, from the UE, indication information #C indicating that the UE stores the first report.

The indication information #C may be an information element "SHRAvailableIndicator" in an RRC message.

S406: The transmission node determines that data transmission exists between the UE and the transmission node.

In this application, regardless of whether the data transmission between the UE and the transmission node succeeds, provided that the data transmission is performed between the UE and the transmission node, it may be considered that the data transmission exists.

Optionally, when the transmission node receives an uplink data packet from the UE, or when the transmission node receives feedback information of a downlink data packet from the UE, the transmission node determines that the data transmission exists between the UE and the transmission node.

S407: The transmission node sends, to the UE, request information for requesting to report the first report.

Specifically, to determine whether the user plane interruption time information in the first report corresponding to the indication information #C is related to a handover of the UE to the transmission node or related to a historical handover process of the UE, after the transmission node determines that the data transmission is performed or successful data transmission is performed between the transmission node and the UE, the transmission node may send, to the UE, the request information for requesting to report the first report.

Therefore, the UE may send the first report including the user plane interruption time information to the transmission node, where the user plane interruption time information may include first time information or second time information. For descriptions of the user plane interruption time, refer to related content in the foregoing embodiments. It may be understood that the user plane interruption time information is related to the handover process in which the UE hands over from the source base station to the target base station, but the transmission node is not limited to the target base station, but may alternatively be another base station accessed by the UE after the UE hands over from the target base station. The transmission node may forward the first report to the target base station.

In this implementation, after determining that the data transmission exists between the transmission node and the UE, the transmission node requests the UE to report the first report, to avoid a case in which the UE cannot report the user plane interruption time information because no data transmission is performed between the transmission node and the UE, so that the network side can obtain, in a timely manner, the first report including the user plane interruption time information, to improve an effect of performing mobility optimization on the UE.

FIG. 5 is a schematic flowchart of an information recording method according to this application. The method is used to determine a cell corresponding to a CHO configuration in radio link failure (radio link failure, RLF) information reported by UE. The method includes the following steps.

S501: The UE hands over from a source cell to a target cell.

The source cell is managed by a source base station, and the target cell is managed by a target base station. It may be understood that a manner in which the UE hands over from the source cell to the target cell may be any one of an ordinary handover, a CHO, a DAPS HO, RACH-less, MBB, eMBB, or another type of handover.

S502: When an RLF occurs on the UE in the target cell, the UE records the RLF information, where the RLF information includes CHO configuration information, and the RLF information indicates a cell corresponding to the CHO configuration information.

The CHO configuration information may include identification information of a CHO candidate cell. Optionally, the CHO configuration information may further include at least one of execution trigger condition information of the CHO candidate cell and measurement result information of the CHO candidate cell.

The RLF information may also be referred to as an RLF report. Optionally, the RLF information further includes any one or more of information about a cell in which the RLF occurs, that is, cell information of the target cell, and/or information about a cell that transmits a latest handover command executed by the UE, for example, cell information of the source cell. The cell information may include at least one of a CGI, a PCI, a non-public network identifier (non-public network identifier, NPN ID), a non-terrestrial network identifier (non-terrestrial network identifier, NTN ID), or another cell identifier. Optionally, the cell information further includes a TAC and/or identification information of an access network device to which the cell belongs. Optionally, the RLF information further indicates a type of the handover performed by the UE, and the handover type includes the foregoing ordinary handover, CHO, DAPS HO, RACH-less, MBB, eMBB, or another handover type.

In different scenarios, the CHO configuration information includes different specific CHO configurations. For example, in a scenario 1, the source base station does not provide a CHO configuration of the source cell for the UE, but the UE obtains a CHO configuration of the target cell after accessing the target cell. If the UE detects the RLF in the target cell before a condition trigger condition of at least one candidate cell in the CHO configuration is met, the RLF information recorded by the UE includes the CHO configuration of the target cell. For another example, in a scenario 2, the source base station provides a CHO configuration of the source cell for the UE, and the target cell is a CHO candidate cell. If a CHO condition corresponding to the target cell is met, the UE hands over to the target cell. Alternatively, if the UE hands over to the target cell in another handover manner before a CHO condition of at least one candidate target cell in the CHO configuration of the source cell is met, when the UE detects the RLF in the target cell, the RLF information recorded by the UE includes the CHO configuration of the source cell. For still another example, in a scenario 3, the source base station provides a CHO configuration of the source cell for the UE (for example, refer to related descriptions in the scenario 2), and the target base station provides a CHO configuration of the target cell for the UE (for example, refer to related descriptions in the scenario 1). The UE may record the CHO configuration information only once, where the CHO configuration information may be the CHO configuration of the source cell or the CHO configuration of the target cell. Alternatively, the UE may record the CHO configuration of the source cell and the CHO configuration of the target cell. In any one of the foregoing scenarios, the UE records the CHO configuration information in the RLF information, but a network device may not be able to determine cell information corresponding to the CHO configuration information, and therefore cannot optimize a corresponding mobility parameter.

In embodiments, the CHO configuration information recorded by the UE in the RLF information may be associated with a corresponding cell, so that a transmission node that receives the RLF information can learn of, based on the RLF information reported by the UE, the cell corresponding to the CHO configuration information, and perform corresponding mobility optimization on the cell.

Optionally, the CHO configuration information includes only one CHO configuration, for example, a first CHO configuration. In an implementation, the RLF information includes first indication information, where the first indication information is used to determine a cell corresponding to the first CHO configuration. In this implementation, the cell corresponding to the CHO configuration is explicitly indicated. This is applicable to a case in which the CHO configuration information includes only the CHO configuration of the source cell or the CHO configuration of the target cell. The first indication information may be one or more bits, and the one or more bits indicate the cell corresponding to the CHO configuration. In another implementation, for example, the cell corresponding to the first CHO configuration is predefined as the source cell in an implicit indication manner. Alternatively, the cell corresponding to the first CHO configuration is predefined as the target cell in an implicit indication manner.

Optionally, the CHO configuration information includes the first CHO configuration and a second CHO configuration.

In an implementation, the RLF information further includes indication information indicating cell identifiers respectively corresponding to the first CHO configuration and the second CHO configuration. For example, the RLF information includes identification information of the source cell and identification information of the target cell. Based on the indication information, the network device may respectively associate first CHO configuration/second CHO configuration information with different cell identification information.

In an implementation, for example, in an implicit manner, it may be predefined that recording orders of the first CHO configuration and the second CHO configuration in the RLF information respectively indicate the cell corresponding to the first CHO configuration and a cell corresponding to the second CHO configuration. For example, it is predefined that the CHO configuration corresponding to the source cell is recorded before the CHO configuration corresponding to the target cell. If the first CHO configuration and the second CHO configuration are recorded in the RLF information in the following order: { first CHO configuration, second CHO configuration}, the first CHO configuration corresponds to the source cell, and the second CHO configuration corresponds to the target cell; or if the first CHO configuration and the second CHO configuration are recorded in the RLF information in the following order: {second CHO configuration, first CHO configuration}, the second CHO configuration corresponds to the source cell, and the first CHO configuration corresponds to the target cell; and vice versa.

In an implementation, for example, in an explicit manner, the RLF information includes second indication information and/or third indication information, where the second indication information indicates the cell corresponding to the first CHO configuration, and/or the third indication information indicates the cell corresponding to the second CHO configuration. A function of the second indication information or the third indication information is similar to that of the foregoing first indication information. For details, refer to descriptions of the first indication information.

Optionally, in an implementation, the method further includes S503: The UE sends the RLF information to the transmission node.

The transmission node may be a base station or another access network device that has a function of the base station. The following uses an example in which the transmission node is the base station for description.

The transmission node may be the source base station or the target base station in a UE handover process. In addition, because reporting of the RLF information may be delayed, the transmission node may alternatively be a base station currently accessed by the UE other than the source base station and the target base station, for example, a third base station accessed by the UE after the UE hands over from the target base station.

Optionally, the RLF information received by the transmission node from the UE includes the CHO configuration information, where the CHO configuration information includes the first CHO configuration, or includes the first CHO configuration and the second CHO configuration.

Optionally, in an implementation, the method further includes S504: The transmission node sends some or all of the RLF information to an aim base station.

The aim base station includes the source base station or the target base station.

Optionally, the transmission node sends some or all of the RLF information through a communication interface between the transmission node and the aim base station. Optionally, the transmission node sends some or all of the RLF information to the aim base station via a core network device. For specific descriptions of the two manners of forwarding the RLF information by the transmission node, refer to related descriptions of forwarding the first report by the transmission node in the embodiment shown in FIG. 4a.

Optionally, the transmission node sends, to the aim base station, indication information indicating a type of the RLF information, where the type of the RLF information is determined based on an RAT of the cell in which the RLF is generated, and may also be referred to as a format of the RLF information. A coding format of the RLF information varies with the type of the RLF information. The type of the RLF information may correspond to various RATs, for example, NR, LTE, or eLTE. The aim base station may determine the coding format of the RLF information based on the indication information, to correctly parse the RLF information. Optionally, the indication information and the RLF information are included in one message, or the indication information is included in the RLF information. The RLF information may be included in a container. The type of the RLF information has a meaning similar to that of the format of the first report in the foregoing embodiments.

Optionally, in an implementation, the source base station that receives the RLF information from the transmission node may further send all or some information related to the target base station in the RLF information to the target base station. Alternatively, the target base station that receives the RLF information from the transmission node may further send all or some information related to the source base station in the RLF information to the source base station.

Optionally, in an implementation, the transmission node is the source base station, the RLF information includes the first CHO configuration and the second CHO configuration, and the method further includes: Before sending the RLF information to the target base station, the transmission node deletes the CHO configuration information corresponding to the source cell, for example, the first CHO configuration. In another implementation, the transmission node is the target base station, the RLF information includes the first CHO configuration and the second CHO configuration, and the method further includes: Before sending the RLF information to the source base station, the transmission node deletes the CHO configuration information corresponding to the target cell, for example, the second CHO configuration. A CHO configuration that does not need to be forwarded is deleted, to release a storage resource of the transmission node.

Optionally, in an implementation, when the transmission node is of a distributed structure, for example, including a CU and a DU, that the transmission node receives the RLF information from the UE includes: The CU node receives the RLF information, and sends some or all of the RLF information to the DU node. Optionally, if the CU node may be divided into a CU-CP entity and a CU-UP entity, the CU-CP entity may send some or all information included in the RLF information to the CU-UP entity.

Similar to an SHR and a random access report, the RLF information described above is also one type of SON information. The SON information may be forwarded by a network device that receives the SON information, for example, the foregoing transmission node, to any one or more network devices related to the SON information. For example, the SON information is forwarded by the source base station to the target base station, forwarded by the target base station to the source base station, or forwarded by the third base station other than the source base station/target base station to the source base station/target base station. Details are not described.

It may be understood that the embodiment shown in FIG. 5 may be combined with any one or more of the foregoing embodiments. For example, if the RLF occurs after the UE accesses the target cell, the UE may record the first report in the manner described in the embodiment shown in FIG. 2 or FIG. 3, record the RLF information in the method described in the embodiment shown in FIG. 5, and report the first report and the RLF information to the transmission node. The transmission node may forward the first report in the manner described in the embodiment shown in FIG. 4a, and forward the first report in the manner described in the embodiment shown in FIG. 5.

According to the information transmission method described in the foregoing embodiment, the cell corresponding to the CHO configuration information in the RLF information reported by the UE is determined, so that a base station corresponding to the cell can perform proper mobility parameter optimization based on the corresponding CHO configuration information.

Embodiments of this application further provide a communication apparatus configured to implement any one of the foregoing methods, for example, provide a communication apparatus including a unit (or a means) configured to implement steps performed by the terminal or the access network device in any one of the foregoing methods. For example, FIG. 6 is a schematic of a communication apparatus according to an embodiment of this application. The communication apparatus may be a module, for example, a chip, used in a terminal or an access network device. Alternatively, the communication apparatus is the terminal or the access network device. As shown in FIG. 6, the communication apparatus 600 includes a processing unit 610 and a transceiver unit 620.

In an implementation, when the communication apparatus is used in the terminal, the communication apparatus may perform steps performed by the UE in the method in any one of the embodiments shown in FIG. 2 to FIG. 4a, FIG. 4b, and FIG. 5. For more detailed descriptions of functions performed by the units of the communication apparatus, refer to descriptions of the steps performed by the UE in the foregoing method embodiments.

In an implementation, when the communication apparatus is used in the access network device, the communication apparatus may perform steps performed by the receiving base station or the transmission node in the method in any one of the embodiments shown in FIG. 2 to FIG. 4a,

FIG. 4b, and FIG. 5. For more detailed descriptions of functions performed by the units of the communication apparatus, refer to descriptions of the steps performed by the receiving base station or the transmission node in the foregoing method embodiments.

It should be understood that division into the units in the apparatus is merely logical function division. During actual implementation, all or some of the units may be integrated into one physical entity or may be physically separated. For example, the transceiver unit 620 may be divided into a receiving unit and a sending unit. When the communication apparatus 600 is a communication apparatus on an access network side, the transceiver unit 620 may alternatively be divided into a first transceiver unit communicating with the terminal, and a second transceiver unit communicating with another network device, for example, a base station or an OAM.

All of the units in the apparatus may be implemented in a form of software invoked by a processing element, or may be implemented in a form of hardware; or some of the units may be implemented in a form of software invoked by a processing element, and some of the units may be implemented in a form of hardware. For example, each unit may be a separately disposed processing element, or may be integrated into a chip of the apparatus for implementation. In addition, each unit may be stored in a memory in a form of a program, and invoked by a processing element of the apparatus to perform a function of the unit. In addition, all or some of the units may be integrated together, or may be independently implemented. The processing element described herein may also be referred to as a processor, and may be an integrated circuit that has a signal processing capability. In an implementation process, the steps in the foregoing methods or the foregoing units may be implemented by using a hardware integrated logic circuit in the processing element, or may be implemented in the form of software invoked by the processing element.

In an example, a unit in any one of the foregoing apparatuses may be one or more integrated circuits configured to implement the foregoing methods, for example, one or more application-specific integrated circuits (Application-Specific Integrated Circuits, ASICs), one or more microprocessors (digital signal processors, DSPs), one or more field programmable gate arrays (Field Programmable Gate Arrays, FPGAs), or a combination of at least two of these forms of integrated circuits. For another example, when the units in the apparatus may be implemented in a form of a program scheduled by the processing element, the processing element may be a general-purpose processor, for example, a central processing unit (Central Processing Unit, CPU) or another processor that can invoke the program. For another example, the units may be integrated together and implemented in a form of a system-on-a-chip (system-on-a-chip, SoC).

The foregoing unit (for example, a communication unit) configured for receiving is an interface circuit of the apparatus, and is configured to receive a signal from another apparatus. For example, when the apparatus is implemented by using a chip, the receiving unit is an interface circuit that is of the chip and that is configured to receive a signal from another chip or apparatus. The foregoing unit (for example, the sending unit or the communication unit) configured for sending is an interface circuit of the apparatus, and is configured to send a signal to another apparatus. For example, when the apparatus is implemented by using the chip, the sending unit is an interface circuit that is of the chip and that is configured to send a signal to another chip or apparatus.

In another implementation, the communication apparatus provided in embodiments of this application may include at least one processing element and an interface circuit. The at least one processing element is configured to perform any method provided in the foregoing method embodiments. The processing element may perform, in a first manner, that is, in a manner of invoking a program stored in a storage element, some or all steps performed by the terminal or the network device; may perform, in a second manner, that is, in a manner of combining a hardware integrated logic circuit in the processing element with instructions, some or all steps performed by the terminal or the network device; or may certainly perform, with reference to the first manner and the second manner, some or all steps performed by the terminal or the network device. It may be understood that the interface circuit may be a transceiver or an input/output interface. Optionally, the communication apparatus may further include a memory, configured to: store instructions executed by the foregoing one processing element, store input data needed by the processing element to run instructions, or store data generated by running instructions by the processing element.

As described above, the processing element herein may be a general-purpose processor, for example, a CPU, or may be one or more integrated circuits, for example, one or more ASICs, one or more microprocessors DSPs, one or more FPGAs, or a combination of at least two of these forms of integrated circuits, configured to implement the foregoing methods. The storage element may be one memory, or may be a general term of a plurality of storage elements.

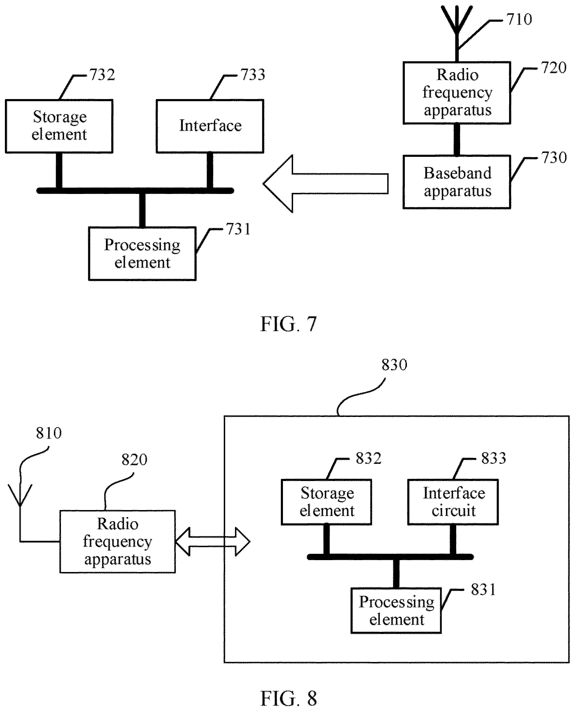

FIG. 7 is a schematic of a structure of a network device according to an embodiment of this application. The network device may be an access network device, for example, a base station, and is configured to perform the method performed by the receiving base station or the transmission node in any one of the foregoing method embodiments, for example, the embodiments shown in FIG. 2 to FIG. 4a, FIG. 4b, and FIG. 5. As shown in FIG. 7, the network device includes an antenna 77, a radio frequency apparatus 720, and a baseband apparatus 730. The antenna 77 is connected to the radio frequency apparatus 720. In an uplink direction, the radio frequency apparatus 720 receives, through the antenna 77, information sent by a terminal, and sends, to the baseband apparatus 730 for processing, the information sent by the terminal. In a downlink direction, the baseband apparatus 730 processes information of the terminal, and sends the information to the radio frequency apparatus 720. After processing the information of the terminal, the radio frequency apparatus 720 sends the information to the terminal through the antenna 77.

The baseband apparatus 730 may include one or more processing elements 731, for example, include a main control CPU and another integrated circuit. In addition, the baseband apparatus 730 may further include a storage element 732 and an interface 733. The storage element 732 is configured to store a program and data. The interface 733 is configured to exchange information with the radio frequency apparatus 720. The interface is, for example, a common public radio interface (common public radio interface, CPRI). The foregoing apparatus used in the network device may be located in the baseband apparatus 730. For example, the foregoing apparatus used in the network device may be a chip on the baseband apparatus 730, and the chip includes at least one processing element and an interface circuit. The processing element is configured to perform steps performed by an access network device, for example, the receiving base station or the transmission node in any method provided in the foregoing method embodiments. The interface circuit is configured to communicate with another apparatus. In an implementation, units in the network device for implementing the steps in the foregoing methods may be implemented in a form of a program scheduled by the processing element. For example, the apparatus used in the network device includes a processing element and a storage element. The processing element invokes a program stored in the storage element, to perform the method provided in any one of the foregoing method embodiments. The storage element may be a storage element located on a same chip as the processing element, that is, an on-chip storage element, or may be a storage element located on a different chip from the processing element, that is, an off-chip storage element.

FIG. 8 is a schematic of a structure of a terminal according to an embodiment of this application. The terminal is configured to implement the method performed by the UE in any one of the foregoing method embodiments, for example, the embodiments in FIG. 2 to FIG. 4a, FIG. 4b, and FIG. 5. As shown in FIG. 8, the terminal includes an antenna 87, a radio frequency part 820, and a signal processing part 830. The antenna 87 is connected to the radio frequency part 820. In a downlink direction, the radio frequency part 820 receives, through the antenna 87, information sent by a network device, and sends, to the signal processing part 830 for processing, the information sent by the network device. In an uplink direction, the signal processing part 830 processes information of the terminal, and sends the information to the radio frequency part 820. After processing the information of the terminal, the radio frequency part 820 sends the information to the network device through the antenna 87.

The signal processing part 830 is configured to process each communication protocol layer of data. The signal processing part 830 may be a subsystem of the terminal. In this case, the terminal may further include another subsystem, for example, a central processing subsystem, configured to process an operating system and an application layer of the terminal; or for another example, a peripheral subsystem, configured to connect to another device. The signal processing part 830 may be a separately disposed chip. Optionally, the foregoing apparatus may be located in the signal processing part 830.

The signal processing part 830 may include one or more processing elements 831, for example, include a main control CPU and another integrated circuit. In addition, the signal processing part 830 may further include a storage element 832 and an interface circuit 833. The storage element 832 is configured to store data and a program. A program used to perform the method performed by the terminal in the foregoing methods may or may not be stored in the storage element 832, for example, stored in a memory outside the signal processing part 830. When used, the program is loaded by the signal processing part 830 into a cache for use. The interface circuit 833 is configured to communicate with the apparatus. The foregoing apparatus may be located in the signal processing part 830. The signal processing part 830 may be implemented by using a chip. The chip includes at least one processing element and an interface circuit. The processing element is configured to perform steps performed by the terminal in any method provided in the foregoing method embodiments. The interface circuit is configured to communicate with another apparatus. In an implementation, units for implementing the steps in the foregoing methods may be implemented in a form of a program scheduled by the processing element. For example, the apparatus includes a processing element and a storage element. The processing element invokes a program stored in the storage element, to perform any method provided in the foregoing method embodiments. The storage element may be a storage element located on a same chip as the processing element, that is, an on-chip storage element.

In another implementation, a program used to perform the foregoing method performed by the terminal or the network device may be in a storage element located on a different chip from the processing element, that is, an off-chip storage element. In this case, the processing element invokes or loads the program from the off-chip storage element to the on-chip storage element, to invoke and perform any method in the foregoing method embodiments.

In still another implementation, units of the terminal or the network device for implementing the steps in the foregoing methods may be configured as one or more processing elements. The processing element herein may be an integrated circuit, for example, one or more ASICs, one or more DSPs, one or more FPGAs, or a combination of these types of integrated circuits. These integrated circuits may be integrated together to form a chip.

The units for implementing the steps in the foregoing methods may be integrated together, and implemented in a form of a system-on-a-chip (system-on-a-chip, SoC). The SoC chip is configured to implement the foregoing methods. At least one processing element and a storage element may be integrated into the chip, and the processing element invokes a program stored in the storage element to implement the foregoing method performed by the terminal or the network device. Alternatively, at least one integrated circuit may be integrated into the chip, to implement the foregoing method performed by the terminal or the network device. Alternatively, with reference to the foregoing implementations, functions of some units may be implemented by a program invoked by a processing element, and functions of some units may be implemented by an integrated circuit.

An embodiment of this application further provides a communication system, including a terminal and an access network device. The terminal may perform steps performed by the UE in any method provided in the foregoing method embodiments. The access network device may perform steps performed by the receiving base station or the transmission node in any method provided in the foregoing method embodiments.

A person of ordinary skill in the art may understand that all or some of the steps of the foregoing method embodiments may be implemented by a program instructing relevant hardware. The foregoing program may be stored in a computer-readable storage medium. When the program is executed, the steps of the foregoing method embodiments are performed. The foregoing storage medium includes any medium that can store program code, for example, a ROM, a RAM, a magnetic disk, or an optical disc.

The resource in this application may also be referred to as a transmission resource, includes one or more of a time domain resource, a frequency domain resource, and a code channel resource, and may be used to carry data or signaling in an uplink communication process or a downlink communication process.

The protocol in this application may be a communication protocol or a specification, for example, a 3GPP communication protocol.

It should be understood that the term "and/or" in this specification describes only an association relationship between associated objects and represents that three relationships may exist. For example, A and/or B may represent the following three cases: Only A exists, both A and B exist, and only B exists. In addition, the symbol "/" in this application may represent "and/or". For example, A/B represents A and/or B.

It should be understood that, in embodiments of the present invention, "B corresponding to A" indicates that B is associated with A, and B may be determined based on A. However, it should be further understood that determining B based on A does not mean that B is determined based on only A. B may alternatively be determined based on A and/or other information.

"A plurality of" in embodiments of this application means two or more than two.

Descriptions such as first and second in embodiments of this application are merely used to illustrate and distinguish between described objects, indicate no order, do not represent a particular limitation on a quantity of described objects in embodiments of this application, and cannot constitute any limitation on embodiments of this application.

Unless otherwise specified, "transmission" (transmit/transmission) in embodiments of this application means bidirectional transmission, and includes sending and/or receiving actions. Specifically, "transmission" in embodiments of this application includes data sending, data receiving, or data sending and data receiving. In other words, data transmission herein includes uplink and/or downlink data transmission. The data may include information and/or a signal. The uplink data transmission is uplink information and/or uplink signal transmission, and the downlink data transmission is downlink information and/or downlink signal transmission.

Content in embodiments of this application may be mutually referenced. Unless otherwise specified or logically conflicted, terms and/or descriptions in different embodiments are consistent and may be mutually referenced, and technical features in different embodiments may be combined based on an internal logical relationship thereof, to form a new embodiment.

It may be understood that, in embodiments of this application, the terminal and/or the network device may perform some or all of the steps in embodiments of this application. These steps or operations are merely examples. In embodiments of this application, other operations or variations of various operations may be further performed. In addition, the steps may be performed in different sequences presented in embodiments of this application, and it is possible that not all of the operations in embodiments of this application need to be performed.

## Claims

1. An information recording method, wherein the method is used for a terminal, and the method comprises:
handing over from a source cell of a source access network device to a target cell of a target access network device; and
recording a first report, and recording a second report, wherein
the first report comprises related information in a process in which the terminal hands over from the source cell to the target cell, and identification information of the terminal in the target cell; and
the second report comprises related information in a process in which the terminal performs random access to the target cell, and the identification information of the terminal in the target cell.

2. The method according to claim 1, further comprising:
sending the first report to the target access network device or the source access network device via a first access network device; or sending the first report to the target access network device or the source access network device.

3. The method according to claim 1 or 2, further comprising:
sending the second report to the target access network device or the source access network device via a second access network device; or sending, by the terminal, the second report to the target access network device or the source access network device.

4. The method according to any one of claims 1 to 3, wherein the first report and/or the second report further comprise/comprises any one or more of the following information:
first indication information, wherein the first indication information indicates whether running duration of a first timer exceeds a first threshold;
time information indicating the process in which the terminal performs the random access to the target cell; or
the running duration of the first timer, wherein
the first timer is used to trigger the terminal to record the first report, and the running duration of the first timer is duration from time when the terminal receives a handover indication or starts to perform a conditional handover CHO to time when the terminal successfully completes the random access to the target cell.

5. The method according to any one of claims 2 to 4, wherein potential handover failure information comprises user plane interruption time information, wherein
the user plane interruption time information comprises first time information or second time information, wherein the first time information indicates duration from time of last data transmission between the terminal and the source access network device to time of first data transmission between the terminal and the target access network device; and
the second time information indicates duration from the time of the last data transmission between the terminal and the source access network device to time when the terminal determines to send the first report to the target network device, or indicates duration from the time of the last data transmission between the terminal and the source access network device to time when the terminal sends the first report to the first access network device.

6. The method according to claim 5, wherein the first report further comprises indication information indicating a type of the user plane interruption time information.

7. The method according to any one of claims 2 to 6, wherein the recording a first report comprises:
recording the first report according to a format corresponding to a radio access technology of the source cell; or
recording the first report according to a format corresponding to a radio access technology of the target cell.

8. The method according to claim 7, wherein the recording the first report according to a format corresponding to a radio access technology of the target cell comprises:
recording the first report according to the format corresponding to the radio access technology of the target cell as predefined in a protocol;
when a quantity of times that the terminal attempts to access the target cell exceeds a second threshold, recording the first report according to the format corresponding to the radio access technology of the target cell;
when recording of the first report is triggered because the running duration of the first timer exceeds the first threshold, recording the first report according to the format corresponding to the radio access technology of the target cell, wherein the running duration of the first timer is the duration from the time when the terminal receives a handover command or starts to perform the conditional handover CHO to the time when the terminal successfully completes the random access to the target cell; or
when quality of a communication link between the terminal and the target cell is less than a third threshold, recording, by the terminal, the first report according to the format corresponding to the radio access technology of the target cell.

9. The method according to claim 7, wherein the recording, by the terminal, the first report according to a format corresponding to a radio access technology of the source cell comprises:
recording the first report according to the format corresponding to the radio access technology of the source cell as predefined in a protocol; or
when quality of a communication link between the terminal and the source cell is less than a fourth threshold, recording the first report according to the format corresponding to the radio access technology of the source cell.

10. The method according to any one of claims 7 to 9, wherein the sending the first report to the target access network or the source access network device via a first access network device comprises:
sending a container container to the first access network device, wherein the container comprises the first report; and
the method further comprises: sending identification information of an aim cell of the first report to the first access network device, wherein the aim cell is the target cell or the source cell.

11. The method according to any one of claims 1 to 11, wherein the identification information of the terminal in the target cell is a cell radio network temporary identifier or a temporary cell radio network temporary identifier of the terminal in the target cell.

12. The method according to any one of claims 1 to 12, wherein the radio access technology of the source cell is different from the radio access technology of the target cell.

13. An information transmission method, wherein the method is used for a transmission node, and the method comprises:
receiving a first report and/or a second report from a terminal, wherein
the first report comprises potential handover failure information in a process in which the terminal hands over from a source cell of a source access network device to a target cell of a target access network device, and identification information of the terminal in the target cell; and
the second report comprises related information in a process in which the terminal performs random access to the target cell, and the identification information of the terminal in the target cell.

14. The method according to claim 13, wherein when the first report is received, the method further comprises:
determining, based on the first report, a reason for triggering reporting of the first report; and
determining, based on the reason for triggering the reporting of the first report, to send the first report to the target access network device and/or the source access network device.

15. The method according to claim 14, wherein the determining, based on the reason for triggering the reporting of the first report, to send the first report to the target access network device and/or the source access network device comprises:
when recording of the first report is triggered because a first timer exceeds a first threshold, sending content related to the source access network device in the first report to the source access network device, and sending content related to the target access network device in the first report to the target access network device; or
when recording of the first report is triggered because running duration of a second timer exceeds a second threshold or running duration of a third timer exceeds a third threshold, sending the first report to the source access network device, wherein
running duration of the first timer is duration from time when the terminal receives a handover indication or starts to perform a conditional handover CHO to time when the terminal completes the random access to the target cell, the running duration of the second timer is duration from time when the terminal device starts detection to time when a physical layer problem is detected between the terminal device and the source network device, and the running duration of the third timer is duration that is during running of the second timer and that is from time when the terminal triggers reporting of a measurement report to time when synchronization between the terminal and the source access network device is resumed.

16. The method according to claim 13, wherein when the first report is received, the method further comprises:
receiving identification information of an aim cell from the terminal; and
sending, based on the identification information of the aim cell, the first report to an access network device to which the aim cell belongs, to send the first report to the target access network device, wherein the aim cell is the source cell or the target cell.

17. The method according to any one of claims 13 to 16, wherein the receiving a first report from a terminal comprises:
receiving a container container from the terminal, wherein the container comprises the first report.

18. The method according to claim 16, wherein the method further comprises: indicating, by the transmission node, a format of the first report to the access network device to which the aim cell belongs.

19. The method according to claim 13, wherein the transmission node is the target access network device or the source access network device, and when the transmission node receives the first report and the second report, the method further comprises:
associating the first report with the second report based on the identification information that is of the terminal in the target cell and that is separately comprised in the first report and the second report.

20. The method according to any one of claims 13 to 19, wherein
the potential handover failure information comprises user plane interruption time information, wherein
the user plane interruption time information comprises first time information or second time information, wherein the first time information indicates duration from time of last data transmission between the terminal and the source access network device to time of first data transmission between the terminal and the target access network device; and
the second time information indicates duration from the time of the last data transmission between the terminal and the source access network device to time when the terminal determines to send the first report to the transmission node, or indicates duration from the time of the last data transmission between the terminal and the source access network device to time when the terminal sends the first report to the transmission node, wherein the transmission node is the target access network device.

21. The method according to any one of claims 13 to 19, wherein the method further comprises:
receiving, from the terminal, indication information indicating that the terminal stores the first report;
determining that data transmission exists between the terminal and the transmission node; and
sending, to the terminal, a request for requesting the terminal to report the first report.

22. The method according to claim 21, wherein based on an uplink data packet from the terminal, or when feedback information of a downlink data packet is received from the terminal, it is determined that the data transmission exists between the terminal and the transmission node.

23. The method according to claims 13 to 22, wherein the identification information of the terminal in the target cell is a cell radio network temporary identifier or a temporary cell radio network temporary identifier of the terminal in the target cell.

24. The method according to any one of claims 13 to 23, wherein a radio access technology of the source cell is different from a radio access technology of the target cell.

25. A communication apparatus, comprising:
an access unit, configured to perform a handover from a source cell of a source access network device to a target cell of a target access network device; and
a recording unit, configured to: record a first report, and record a second report, wherein
the first report comprises related information in a process in which a terminal hands over from the source cell to the target cell, and identification information of the terminal in the target cell; and
the second report comprises related information in a process in which the terminal performs random access to the target cell, and the identification information of the terminal in the target cell.

26. The communication apparatus according to claim 25, further comprising:
a sending unit, configured to: send the first report to the target access network device or the source access network device via a first access network device; or send the first report to the target access network device or the source access network device.

27. The communication apparatus according to claim 25 or 26, further comprising:
the sending unit, configured to: send the second report to the target access network device or the source access network device via a second access network device; or send, by the terminal, the second report to the target access network device or the source access network device.

28. The communication apparatus according to any one of claims 25 to 27, wherein the first report and/or the second report further comprise/comprises any one or more of the following information:
first indication information, wherein the first indication information indicates whether running duration of a first timer exceeds a first threshold;
time information indicating the process in which the terminal performs the random access to the target cell; or
the running duration of the first timer, wherein
the first timer is used to trigger the terminal to record the first report, and the running duration of the first timer is duration from time when the terminal receives a handover indication or starts to perform a conditional handover CHO to time when the terminal successfully completes the random access to the target cell.

29. The communication apparatus according to any one of claims 26 to 28, wherein potential handover failure information comprises user plane interruption time information, wherein
the user plane interruption time information comprises first time information or second time information, wherein the first time information indicates duration from time of last data transmission between the terminal and the source access network device to time of first data transmission between the terminal and the target access network device; and
the second time information indicates duration from the time of the last data transmission between the terminal and the source access network device to time when the terminal determines to send the first report to the target network device, or indicates duration from the time of the last data transmission between the terminal and the source access network device to time when the terminal sends the first report to the first access network device.

30. The method according to claim 29, wherein the first report further comprises indication information indicating a type of the user plane interruption time information.

31. The communication apparatus according to any one of claims 26 to 30, wherein the recording unit is specifically configured to:
record the first report according to a format corresponding to a radio access technology of the source cell; or
record the first report according to a format corresponding to a radio access technology of the target cell.

32. The communication apparatus according to claim 31, wherein the recording unit is specifically configured to:
record the first report according to the format corresponding to the radio access technology of the target cell as predefined in a protocol;
when a quantity of times that the terminal attempts to access the target cell exceeds a second threshold, record the first report according to the format corresponding to the radio access technology of the target cell;
when recording of the first report is triggered because the running duration of the first timer exceeds the first threshold, record the first report according to the format corresponding to the radio access technology of the target cell, wherein the running duration of the first timer is the duration from the time when the terminal receives a handover command or starts to perform the conditional handover CHO to the time when the terminal successfully completes the random access to the target cell; or
when quality of a communication link between the terminal and the target cell is less than a third threshold, record the first report according to the format corresponding to the radio access technology of the target cell.

33. The communication apparatus according to claim 31, wherein the recording unit is specifically configured to:
record the first report according to the format corresponding to the radio access technology of the source cell as predefined in a protocol; or
when quality of a communication link between the terminal and the source cell is less than a fourth threshold, record the first report according to the format corresponding to the radio access technology of the source cell.

34. The communication apparatus according to any one of claims 31 to 33, wherein the sending unit is specifically configured to:
send a container container to the first access network device, wherein the container comprises the first report; and
the sending unit is further configured to send identification information of an aim cell of the first report to the first access network device, wherein the aim cell is the target cell or the source cell.

35. The communication apparatus according to any one of claims 25 to 34, wherein the identification information of the terminal in the target cell is a cell radio network temporary identifier or a temporary cell radio network temporary identifier of the terminal in the target cell.

36. The communication apparatus according to any one of claims 25 to 35, wherein the radio access technology of the source cell is different from the radio access technology of the target cell.

37. A communication apparatus, comprising:
a receiving unit, configured to receive a first report and/or a second report from a terminal, wherein
the first report comprises potential handover failure information in a process in which the terminal hands over from a source cell of a source access network device to a target cell of a target access network device, and identification information of the terminal in the target cell; and
the second report comprises related information in a process in which the terminal performs random access to the target cell, and the identification information of the terminal in the target cell.

38. The communication apparatus according to claim 37, further comprising a processing unit, wherein
when the first report is received, the processing unit is configured to:
determine, based on the first report, a reason for triggering reporting of the first report; and
determine, based on the reason for triggering the reporting of the first report, to send the first report to the target access network device and/or the source access network device.

39. The communication apparatus according to claim 38, wherein the processing unit is specifically configured to:
when recording of the first report is triggered because a first timer exceeds a first threshold, send content related to the source access network device in the first report to the source access network device, and send content related to the target access network device in the first report to the target access network device; or
when recording of the first report is triggered because running duration of a second timer exceeds a second threshold or running duration of a third timer exceeds a third threshold, send the first report to the source access network device, wherein
running duration of the first timer is duration from time when the terminal receives a handover indication or starts to perform a conditional handover CHO to time when the terminal completes the random access to the target cell, the running duration of the second timer is duration from time when the terminal device starts detection to time when a physical layer problem is detected between the terminal device and the source network device, and the running duration of the third timer is duration that is during running of the second timer and that is from time when the terminal triggers reporting of a measurement report to time when synchronization between the terminal and the source access network device is resumed.

40. The communication apparatus according to claim 37, wherein the receiving unit is further configured to: when receiving the first report,
receive identification information of an aim cell from the terminal; and
the communication apparatus further comprises a sending unit, configured to: send, based on the identification information of the aim cell, the first report to an access network device to which the aim cell belongs, to send the first report to the target access network device, wherein the aim cell is the source cell or the target cell.

41. The communication apparatus according to any one of claims 37 to 40, wherein the receiving unit is specifically configured to:
receive a container container from the terminal, wherein the container comprises the first report.

42. The communication apparatus according to claim 40, further comprising the sending unit, configured to indicate a format of the first report to the access network device to which the aim cell belongs.

43. The communication apparatus according to claim 37, wherein a transmission node is the target access network device or the source access network device, and when the transmission node receives the first report and the second report, the processing unit is further configured to associate the first report with the second report based on the identification information that is of the terminal in the target cell and that is separately comprised in the first report and the second report.

44. The communication apparatus according to any one of claims 37 to 43, wherein the potential handover failure information comprises user plane interruption time information, wherein
the user plane interruption time information comprises first time information or second time information, wherein the first time information indicates duration from time of last data transmission between the terminal and the source access network device to time of first data transmission between the terminal and the target access network device; and
the second time information indicates duration from the time of the last data transmission between the terminal and the source access network device to time when the terminal determines to send the first report to the transmission node, or indicates duration from the time of the last data transmission between the terminal and the source access network device to time when the terminal sends the first report to the transmission node, wherein the transmission node is the target access network device.

45. The communication apparatus according to any one of claims 37 to 43, further comprising the sending unit and the processing unit, wherein
the receiving unit is further configured to receive, from the terminal, indication information indicating that the terminal stores the first report;
the processing unit is configured to determine that data transmission exists between the terminal and the transmission node; and
the sending unit is configured to send, to the terminal, a request for requesting the terminal to report the first report.

46. The communication apparatus according to claim 45, wherein the processing unit is specifically configured to: based on an uplink data packet from the terminal, or when feedback information of a downlink data packet is received from the terminal, determine that the data transmission exists between the terminal and the transmission node.

47. The communication apparatus according to claims 37 to 46, wherein the identification information of the terminal in the target cell is a cell radio network temporary identifier or a temporary cell radio network temporary identifier of the terminal in the target cell.

48. The communication apparatus according to any one of claims 37 to 47, wherein a radio access technology of the source cell is different from a radio access technology of the target cell.

49. A communication apparatus, comprising a unit or a module configured to perform the method according to any one of claims 1 to 12.

50. A communication apparatus, comprising a unit or a module configured to perform the method according to any one of claims 13 to 24.

51. A communication apparatus, comprising a processor, wherein the processor is configured to perform the method according to any one of claims 1 to 12.

52. A communication apparatus, comprising a processor, wherein the processor is configured to perform the method according to any one of claims 13 to 23.

53. A computer-readable storage medium, wherein the computer-readable storage medium stores a computer program, and when the computer program is run by a communication apparatus, the communication apparatus is enabled to perform the method according to any one of claims 1 to 23.

54. A communication system, comprising a terminal and a transmission node, wherein the terminal is configured to perform the method according to any one of claims 1 to 12, and the transmission node is configured to perform the method according to any one of claims 13 to 23.
